# EUROPÄISCHE PATENTSCHRIFT

(11) **EP 2 692 066 B1**
(45) Veröffentlichungstag und Bekanntmachung des Hinweises auf die Patenterteilung: **15.07.2015**
(21) Anmeldenummer: 12720403.0
(22) Anmeldetag: 22.03.2012
(51) Int. Cl.: H04B 3/54, H04L 12/413

(54) **ADMINISTRIERBARES ENERGIENETZ MIT DATENÜBERTRAGUNGSFUNKTION**
ADMINISTRABLE POWER NETWORK HAVING A DATA TRANSMISSION FUNCTION
RÉSEAU ÉNERGÉTIQUE ADMINISTRABLE AYANT UNE FONCTION DE TRANSMISSION DE DONNÉES

(30) Priorität: 28.03.2011 DE 102011001602; 30.03.2011 DE 102011001668
(43) Veröffentlichungstag der Anmeldung: 05.02.2014
(73) Patentinhaber: Harting Electric GmbH & Co. KG, 32339 Espelkamp (DE)
(72) Erfinder: HUHMANN, Andreas, 32339 Espelkamp (DE); SPERLICH, Klaus, 32289 Rödinghausen (DE); WITT, John, 32760 Detmold (DE); KLANKE, Volker, 32351 Stemwede (DE); DRESCHER, Jan, 31552 Apelern (DE)
(86) Internationale Anmeldenummer: PCT/DE2012/100074
(87) Internationale Veröffentlichungsnummer: WO 2012/130228

(56) Entgegenhaltungen:
- EP-A1- 2 194 656
- WO-A2-03/094765
- WO-A2-2006/126160
- DE-A1-102004 021 380
- US-A1- 2004 111 496
- US-A1- 2005 018 857
- US-A1- 2005 069 028
- US-A1- 2006 152 344
- US-A1- 2007 091 925

## Beschreibung

Die Erfindung betrifft ein Energienetz mit einer Datenübertragungsfunktion zur Verteilung elektrischer Energie im industriellen Bereich.

Weiterhin betrifft die Erfindung eine Anschlussbox.

In einem weiteren Aspekt betrifft die Erfindung ein Verfahren zum Betrieb des Energienetzes.

Des Weiteren betrifft die Erfindung ein Verfahren zum Messen, Auswerten, Diagnostizieren und Administrieren des Energienetzes.

Derartige Energienetze werden zur Verteilung elektrischer Energie im industriellen Bereich, beispielsweise im Bereich automatisierter Fertigungsstraßen, eingesetzt.

### Stand der Technik

Im Stand der Technik ist es beispielsweise aus der Druckschrift DE10232303A1 bekannt, digitale Daten auf eine Versorgungsspannung zu modulieren und beide gemeinsam über ein elektrisches Energieverteilungsnetz zu übertragen.

Die Druckschrift DE102004021380A1 offenbart eine Vorrichtung zur Stromversorgung, die mehrere Stromversorgungskomponenten aufweist. Die Stromversorgungskomponenten sind jeweils mit einer Kommunikationsschnittstelle versehen und über diese Kommunikationsschnittstelle und einem Kommunikationskanal mit einer gemeinsamen Analyse- und Steuereinheit verbunden. Die Analyse- und Steuereinheit steuert ein Lastmanagement der Stromversorgungskomponenten.

Die Druckschrift DE10155189A1 offenbart ein Verfahren zur Regelung der Stromversorgung mehrerer Feldgeräte, die über eine Datenbusleitung verbunden sind und über die Datenbusleitung mit Strom versorgt werden. Dabei wird der Strombedarf der einzelnen Feldgeräte bestimmt und die Stromaufnahme der Feldgeräte mittels entsprechender Steuersignale eingestellt. Dadurch kann die Stromaufnahme einzelner Feldgeräte zentral eingestellt und damit den Prozessbedingungen angepasst werden.

Die Druckschrift US7058482B2 offenbart ein Daten-Sample- und Übertragungsmodul für ein Energieverteilungssystem. Das Modul besitzt einen Mikroprozessor und einen Netzwerkanschluss. Der Mikroprozessor nimmt ein oder mehrere erste Signale als Hinweis für die Beschaffenheit der Energie im Energieverteilungssystem. Durch das Netzwerkinterface steht der Mikroprozessor in Kommunikation mit einem Datennetzwerk.

Die Druckschrift WO2009127817A1 beschreibt ein selbstorganisierendes Energieverteilungsnetzwerk für großflächige Bereiche. Dabei wird offenbart, dem Energieverteilungsnetzwerk ein Kommunikationsnetz parallel zu schalten und über Schalter und Messeinrichtungen zumindest einen Teil der Topographie zu ermitteln, wobei das Energieverteilungsnetzwerk in Zonenaufgeteilt wird, die daraufhin getrennt voneinander abgeschaltet werden können.

Ein Nachteil im Stand der Technik besteht darin, dass für den industriellen Bereich, beispielsweise den Bereich der Fertigung, der Aufwand zur Diagnose und Administration von Energienetzen sehr groß ist. Beispielsweise ist die Untersuchung, in welchem Bereich zu einem bestimmten Zeitpunkt wie viel Energie verbraucht wird, sehr aufwendig. Damit verbunden ist es auch äußerst schwierig, kostenoptimierend entbehrliche Verbraucher bei einem besonders hohen Gesamtenergieverbrauch abzuschalten.

### Aufgabenstellung

Die Aufgabe der vorliegenden Erfindung besteht somit darin, die Administrierbarkeit und Diagnostizierbarkeit eines Energienetzes der eingangs erwähnten Art bei einem geringst möglichem Installationsaufwand zu vereinfachen. Diese Aufgabe wird dadurch gelöst, dass das Energienetz eine Rechnereinheit und mehrere Anschlussboxen umfasst,
wobei die Rechnereinheit eine Software sowie mindestens einen Rechner-Datennetzwerkanschluss aufweist,
wobei jede Anschlussbox mindestens drei innerhalb der Anschlussbox über eine sich verzweigende interne Energieleitung elektrisch leitend miteinander verbundene Energieanschlüsse und mindestens einen, bevorzugt zwei Boxen-Datennetzwerkanschlüsse aufweist,
wobei die Rechnereinheit über ihren Rechner-Datennetzwerkanschluss an ein Datennetzwerk angeschlossen ist und wobei mindestens eine der Anschlussboxen über einen ihrer Boxen-Datennetzwerkanschlüsse an das Datennetzwerk angeschlossen ist und somit über das Datennetzwerk mit der Rechnereinheit in Datenaustausch steht,
wobei mindestens eine der Anschlussboxen mit einem ihrer Energieanschlüsse über ein Energiekabel direkt an eine externe elektrische Energieversorgungseinrichtung angeschlossen ist,
wobei jede Anschlussbox mit mindestens einem ihrer Energieanschlüsse über jeweils ein Energiekabel an einen der Energieanschlüsse mindestens einer ihr direkt benachbarten Anschlussbox angeschlossen ist, so dass jede
der Anschlussboxen direkt oder über die elektrischen Energieanschlüsse einer oder mehrerer anderer Anschlussboxen an die externe Energieversorgungseinrichtung angeschlossen ist,
wobei jede Anschlussbox mit der mindestens einen ihr direkt benachbarten Anschlussbox über das diese beiden Anschlussboxen verbindende Energiekabel in bidirektionalem Datenaustausch steht.

Dabei und im Folgenden werden zwei Anschlussboxen als direkt benachbart bezeichnet, wenn sie jeweils mit einem ihrer Energieanschlüsse über ein Energiekabel direkt an einander angeschlossen sind.

Weiterhin bezeichnet der Begriff Rechner-Datennetzwerkanschluss einen Datennetzwerkanschluss der Rechnereinheit und der Begriff Boxen-Datennetzwerkanschluss bezeichnet einen dazu kompatiblen Datennetzwerkanschluss der jeweiligen Anschlussbox.

Diese Aufgabe wird weiterhin durch eine Anschlussbox gelöst, die Folgendes aufweist:
- Mindestens drei über eine sich verzweigende interne Energieleitung elektrisch leitend miteinander verbundene elektrische Energieanschlüsse, die jeweils sowohl zum Anschluss an eine andere Anschlussbox, als auch zum Anschluss an einen externen Verbraucher, als auch zum Anschluss an eine externe elektrische Energieversorgungseinrichtung geeignet sind;
- für jeden Energieanschluss eine daran angeschlossene Modulations-/Demodulationseinrichtung, welche dazu geeignet ist, Daten auf eine am Energieanschluss anliegende Versorgungsspannung aufzumodulieren;
- einen zur Datenübertragung an die Modulations-/Demodulationseinrichtungen angeschlossenen Datennetzwerk-Switch mit einem Mikroprozessor und mit mindestens einem, bevorzugt zwei externen Boxen-Datennetzwerkanschlüssen;
- mindestens eine an den Datennetzwerk-Switch angeschlossene Messmittelbaugruppe, aufweisend Mittel zur Erfassung der Werte elektrischer Größen an mindestens zwei verschiedenen Messpunkten in verschiedenen Zweigen der internen Energieleitung.

Unter einem "Datennetzwerk-Switch" versteht man dabei eine datentechnische Einrichtung mit mindestens drei Datenanschlüssen ("Ports"), die Daten empfängt und nach bestimmten Kriterien an einige dieser Ports weiterleitet oder zurückhält. Insbesondere besitzt ein Datennetzwerk-Switch mehr als drei Ports und leitet verschiedene von ihm über einen Port empfangene Daten an einen oder mehrere der anderen Ports weiter. Weiterhin kann ein Datennetzwerk-Switch einen Prozessor aufweisen, mit dem er die Daten auch verarbeiten kann.

Unter dem Begriff "elektrische Größen" sind hier und im Folgenden beispielsweise Strom und Spannung sowie auch daraus zu ermittelnde Größen wie z.B. Leistung zu verstehen.

Dementsprechend umfasst der Begriff "Mittel zur Erfassung der Werte elektrischer Größen an mindestens zwei verschiedenen Messpunkten" Strommessgeräte und Spannungsmessgeräte sowie die dazugehörigen Messleitungen. Weiterhin kann auch eine Recheneinheit zu diesem Mitteln gehören, da durch sie Werte wie Effektivwerte und/oder Leistung bzw. Wirkleistung aus den gemessenen Größen Strom und Spannung bestimmt werden können.

Die Aufgabe wird des Weiteren durch ein Verfahren zum Betrieb des Energienetzes gelöst, wobei das Verfahren eine Topologieerkennung umfasst, wobei die Topologieerkennung folgende Schritte aufweist:
- sequentielles Abfragen der Anschlussboxen durch die Rechnereinheit;
- Durchführen einer direkten Nachbarschaftserkennung zwischen jeder Anschlussbox und der mindestens einen ihr direkt benachbarten Anschlussbox,
   wobei die direkte Nachbarschaftserkennung durch die bidirektionale Datenübertragung zwischen jeder Anschlussbox und der mindestens einen ihr direkt benachbarten Anschlussbox über das diese beiden Anschlussboxen verbindende Energiekabel erfolgt;
- Übertragen der direkten Nachbarschaftsbeziehungen von den Anschlussboxen an die Rechnereinheit;
- Abbilden der Topologie des Energienetzes entsprechend der übertragenen direkten Nachbarschaftsbeziehungen durch die Rechnereinheit.

Dabei bedeutet der Begriff "direkte Nachbarschaftserkennung", dass sich eine Anschlussbox gegenüber der ihr direkt benachbarten Anschlussbox Identifiziert, z.B. indem die Anschlussbox ihre IP-Adresse, die MAC-Adresse ihres Datennetzwerk-Switches und/oder eine individuelle Kennung an die mindestens eine ihr direkt benachbarte Anschlussbox überträgt.

Unter dem Begriff "Topologie" ist hier und im Folgenden die Netzstruktur der Energieverteilung zu verstehen. Die Topologie beschreibt somit den Aufbau der Energieverbindungen zwischen den Anschlussboxen, der über den Anschluss der Energiekabel realisiert wird. Unter dem Begriff "Topologieerkennung" ist dementsprechend die Erkennung des Aufbaus der Energieverbindungen zwischen den Anschlussboxen, d.h. deren Verkabelung über Energiekabel, zu verstehen.

Die Aufgabe wird weiterhin durch ein Verfahren zum Messen, Auswerten, Diagnostizieren und Administrieren des Energienetzes gelöst, wobei das Verfahren folgende Schritte umfasst:
- Ermitteln der Werte elektrischer Größen durch die einzelnen Anschlussboxen an ihren Energieanschlüssen;
- Abfragen der Werte der elektrischen Größen der einzelnen Anschlussboxen durch die Rechnereinheit;
- Übertragen der Werte der elektrischen Größen von den Anschlussboxen an die Rechnereinheit;
- Speichern der Werte der elektrischen Größen als den jeweiligen Anschlussboxen zugehörig in einer Datenbank der Rechnereinheit;
- regelmäßiges Berechnen des Energieverbrauchs an den einzelnen Anschlussboxen durch die Rechnereinheit;
- regelmäßiges Berechnen des Gesamtenergieverbrauchs durch die Rechnereinheit.

Vorteilhafte Ausgestaltungen der Erfindung sind in den abhängigen Unteransprüchen angegeben.

Bei der Erfindung handelt es sich um einen Energienetz mit speziellen Anschlussboxen und einem dazugehörigen Betriebs- und Auswertverfahren, das es ermöglicht, nach Aufbau und Verkabelung die Topologie des Energienetzes automatisch zu erkennen und nachzubilden. Auf dieser Basis kann daraufhin der Stromverbrauch in bestimmten Zweigen, beispielsweise auch bei einer baum- oder ringförmigen Topologie, ermittelt werden. Insbesondere können dabei Abweichungen vom Sollwert, beispielsweise ein unverhältnismäßig hoher Stromverbrauch, erkannt und lokalisiert werden, so dass als Folge bestimmte Verbraucher und/oder ganze Energienetzwerksegmente an- und abgeschaltet werden können. Zur Analyse können die entsprechenden Werte relevanter elektrischer Größen kontinuierlich beobachtet, in einer Datenbank gespeichert, über einen beliebigen Zeitraum vorgehalten und graphisch dargestellt werden. Anschlussfehler, Drahtbruch und Überlast sowie Unterspannung können durch die Analyse der Werte der jeweiligen elektrischen Größen erkannt und behoben werden.

Zur direkten Nachbarschaftserkennung ist es von besonderem Vorteil, zumindest die Identifikation einer Anschlussbox gegenüber der mindestens einen ihr direkt benachbarten Anschlussbox über das diese beiden Anschlussboxen verbindende Energiekabel zu übertragen, weil dadurch die Topologie des Energienetzes automatisch abbildbar ist. Dabei ist es vorteilhaft, durch den Einsatz elektrischer Filter in den Anschlussboxen, die insbesondere in den Modulations-/Demodulationseinrichtungen angeordnet sein können, dafür zu sorgen, dass die der Identifikation dienenden Daten ausschließlich zwischen den beiden beteiligten Anschlussboxen, nämlich einer Anschlussbox und einer ihr direkt benachbarten Anschlussbox, ausgetauscht werden, weil dadurch die direkte Nachbarschaftserkennung ermöglicht wird. Insbesondere handelt es sich bei diesem Filter um einen Tiefpassfilter, bevorzugt um eine der internen Energieleitung in Reihe geschaltete Induktivität, die boxenseitig über eine Kapazität mit der Masse verbunden ist.

Der Datennetzwerk-Switch ist von besonderem Vorteil, weil er durch seinen Anschluss an die Modulations-/Demodulationseinrichtungen in der Lage dazu ist, Daten von einem Energieanschluss seiner Anschlussbox an einen andern Energieanschluss seiner Anschlussbox zu übertragen. So können trotz des elektrischen Filters auch Daten über mehrere Anschlussboxen über die sie verbindenden Energiekabel beispielsweise bis zur Rechnereinheit übertragen werden.

Somit wird über die Energiekabel zwischen jeweils zwei Anschlussboxen eine Punkt zu Punkt-Datenverbindung aufgebaut. Über eine Vielzahl solcher Punkt zu Punkt-Datenverbindungen sind bestimmte Daten, wenn gewünscht, auch über das gesamte Energienetz übertragbar. Gleichzeitig wird über die Energiekabel auch eine elektrisch leitende Energieverbindung zwischen allen beteiligten Anschlussboxen realisiert.

Von besonderem Vorteil ist es, dass der Datennetzwerk-Switch der Anschlussboxen jeweils mindestens einen, bevorzugt zwei externe Boxen-Datennetzwerkanschlüsse aufweist, wodurch kaum zusätzliche Kosten entstehen. Dadurch kann er zusätzlich oder alternativ zur Datenübertragung über die Energiekabel auch Daten über das wesentlich schnellere Datennetzwerk übertragen.

Das Datennetzwerk kann prinzipiell beliebig aufgebaut sein. Insbesondere empfiehlt sich jedoch eine lineare Struktur, zum einen, weil dies den Verkabelungsaufwand gering hält und zum anderen, weil dadurch jede Anschlussbox nur zwei Datennetzwerkanschlüsse benötigt. Für eine Sternpunktförmige Struktur ist es notwendig, dass entweder mehrere, aus kompatibilitätsgründen bevorzugt alle Anschlussboxen oder die Rechnereinheit jeweils mehr als zwei Datennetzwerkanschlüsse aufweisen, oder dass das Energienetz mindestens ein weiteres Bauteil umfasst, welches mehr als zwei Datennetzwerkanschlüsse aufweist.

Von besonderem Vorteil ist es, wenn diejenige Anschlussbox, die mit einem ihrer Energieanschlüsse über ein Energiekabel direkt an die externe elektrische Energieversorgung angeschlossen ist, über zwei weitere ihrer Energieanschlüsse über jeweils ein weiteres Energiekabel an die jeweiligen Energieanschlüsse zweier ihr direkt benachbarter Anschlussboxen angeschlossen ist, weil dadurch in der Energieverteilung eine Ring- oder eine Baumstruktur ermöglicht wird. Dies ist vorteilhaft, weil durch sinnvolles Zusammenfassen mehrerer Verbraucher in einem Zweig der Energieverteilung diese gemeinsam administrierbar sind und insbesondere deren Energieversorgung an- und abschaltbar ist.

Zur Erzeugung einer Ring- oder Baumstruktur ist es weiterhin vorteilhaft, wenn mindestens eine derjenigen Anschlussboxen, welche nicht direkt an die externe elektrische Energieversorgung angeschlossen sind, mit mindestens drei ihrer Energieanschlüsse jeweils an mindestens drei ihr direkt benachbarte Anschlussboxen angeschlossen ist. Dies ist vorteilhaft, weil dadurch eine Baumstruktur ermöglicht wird, wobei durch sinnvolles Zusammenfassen mehrerer Verbraucher in einem Zweig diese gemeinsam administrierbar, insbesondere an- und abschaltbar sind.

Bevorzugt können die Anschlussboxen genau drei Energieanschlüsse aufweisen. Dann können beispielsweise an eine Anschlussbox wahlweise drei ihr direkt benachbarte Anschlussboxen oder auch zwei ihr direkt benachbarte Anschlussboxen und ein Verbraucher angeschlossen sein.

In einer weiteren vorteilhaften Ausgestaltung ist zumindest eine Anschlussbox mit einem ihrer Energieanschlüsse über eines der Energiekabel an einen externen Verbraucher angeschlossen. Dies ist vorteilhaft, weil dadurch die Stromversorgung des Verbrauchers gewährleistet ist.

Vorteilhaft ist es in diesem Zusammenhang, den Verbraucher über ein elektrisch betätigbares Schaltgerät , das auch als elektrisch betätigbares Schaltorgan bekannt ist, an den Energieanschluss der betreffenden Anschlussbox anzuschließen. Bei dem elektrisch betätigbaren Schaltgerät kann es sich um einen Leistungsschalter, ein Halbleiterschaltgerät, ein Relais, einen Schütz, ein Motorschutzrelais oder -schalter sowie einen Leitungsschutzschalter handeln. Die Anschlussbox kann einen oder mehrere externe Schaltanschlüsse aufweisen. An einen dieser Schaltanschlüsse kann das Schaltgerät über eine Schaltleitung angeschlossen sein. Die Schaltanschlüsse können zu dem Datennetzwerk-Switch gehören oder sind zumindest an ihn angeschlossen.

Auch kann das Schaltgerät intergraler Bestandteil der Anschlussbox sein. Dementsprechend kann die Anschlussbox auch einen oder mehrere interne Schaltanschlüsse aufweisen und das Schaltgerät kann an einen dieser internen Schaltanschlüsse angeschlossen sein und darüber geschaltet werden, wobei die internen Schaltanschlüsse zu dem Datennetzwerk-Switch gehören oder zumindest an ihn angeschlossen sind.

Vorteilhaft ist es weiterhin, wenn es sich bei den Energiekabeln um Drehstromkabel, bei den Energieanschlüssen um Drehstromanschlüsse und bei der boxeninternen, sich verzweigenden Energieleitung um eine Drehstromleitung handelt, weil dadurch entsprechende Verbraucher, welche Drehstrom benötigen, an das Energienetz angeschlossen und darüber mit Energie versorgt werden können. Dementsprechend kann die Modulations-/Demodulationseinrichtung an nur eine Phase der Drehstromleitung angeschlossen sein. Die Modulations-/Demodulationseinrichtung kann aber auch an zwei Phasen der Drehstromleitung angeschlossen sein, wodurch eine symmetrischen Datenübertragung ermöglicht wird.

Vorteilhaft ist es weiterhin, wenn es sich bei dem Energienetz um ein Gleichstromnetz oder um ein Wechselstromnetz handelt, weil dadurch entsprechende Verbraucher, welche Gleich- oder Wechselstrom benötigen, an das Energienetz angeschlossen und darüber mit Energie versorgt werden können.

Vorteilhaft ist es weiterhin, wenn die Anschlussbox, insbesondere die Modulations-/Demodulationseinrichtung der Anschlussbox, elektrische Filter aufweist, die geeignet sind, die Übertragung der am dazugehörigen Energieanschluss aufmodulierten Daten über die boxeninterne Energieleitung an die anderen elektrischen Energieanschlüsse dieser Anschlussbox zu verhindern. Insbesondere handelt es sich dabei um Tiefpassfilter, insbesondere um eine in Reihe mit dem Energieanschluss geschaltete Induktivität, die in einer bevorzugten Ausführung boxenseitig über eine Kapazität an die Masse angeschlossen ist.

Handelt es sich, wie oben beschrieben, bei den Energiekabeln um Drehstromkabel, bei den Energieanschlüssen um Drehstromanschlüsse und bei der boxeninternen, sich verzweigenden Energieleitung um eine Drehstromleitung, und sind die Modulations-/Demodulationseinrichtungen an nur eine Phase oder an zwei Phasen der Drehstromleitung angeschlossen, dann brauchen auch die elektrischen Filter nur an diese eine oder zwei Phasen angeschlossen zu sein.

Von besonderem Vorteil ist es weiterhin, dass die Anschlussbox jeweils mindestens einen, bevorzugt zwei Boxen-Datennetzwerkanschlüsse besitzt, weil der kabelgebundene Aufbau des Datennetzwerks somit vom Aufbau des Energienetzes abweichen kann. Auf diese Weise können beispielsweise in einer Fertigungshalle bereits existierende und möglicherweise bereits fest verlegte Energiekabel und/oder Datenkabel verwendet werden.

Dabei können die Anschlussboxen auch an ein bereits existierendes Datennetzwerk, beispielsweise Ethernet, angeschlossen sein.

Andererseits ist es auch vorteilhaft, wenn ausschließlich über den Rechner-Datenetzwerkanschluss und die Boxen-Datennetzwerkanschlüsse ein ausschließlich dafür vorgesehenes, gemeinsames Datennetzwerk aufgebaut wird, weil dann kein zusätzliches bzw. bereits existierendes Datennetzwerk benötigt wird. Dabei kann eine erste Anschlussbox mit einem ihrer Boxen-Datennetzwerkanschlüsse über ein erstes Datenkabel an den Rechner-Datennetzwerkanschluss der Rechnereinheit angeschlossen sein. Mit einem weitern Boxen-Datennetzwerkanschluss ist die erste Anschlussbox an einen der Boxen-Datennetzwerkanschlüsse einer eine zweiten Anschlussbox angeschlossen, die wiederum über ein Datenkabel an eine dritte Anschlussbox angeschlossen ist, diese an eine vierte Anschlussbox, usw.

In einer bevorzugten Ausführungsform ist letztlich jede der Anschlussboxen an das Datennetzwerk angeschlossen. Insbesondere ist jede Anschlussbox mit mindestens einem ihrer Boxen-Datennetzwerkanschlüsse an den Boxen-Datennetzwerkanschluss zumindest einer anderen Anschlussbox angeschlossen, so dass jede Anschlussbox mit einem ihrer Boxen-Datennetzwerkanschlüsse direkt oder indirekt, d.h. über eine oder mehrere andere Anschlussboxen, an den Rechner-Datennetzwerkanschluss der Rechnereinheit angeschlossen ist und somit über das so gebildete Datennetzwerk mit dieser in Datenaustausch steht. Dazu ist es vorteilhaft, wenn jede Anschlussbox serienmäßig zwei Boxen-Datennetzwerkanschlüsse aufweist. Die letzte Anschlussbox in der Kette benötigt eigentlich nur einen Boxen-Datennetzwerkanschluss, besitzt jedoch vorteilhafterweise ebenfalls zwei Boxen-Datennetzwerkanschlüsse aus Kompatibilitätsgründen. Dies hat den Vorteil, dass alle Anschlussboxen innerhalb des Energienetzes universell einsetzbar sind.

In einer weiteren bevorzugten Ausführungsform ist nur die erste Anschlussbox an das Netzwerk, d.h. direkt an die Rechnereinheit angeschlossen. Alle weiteren Anschlussboxen senden ihre Daten über die Energiekabel. Somit erfüllt die erste Anschlussbox die Funktion eines Gateways.

In einer bevorzugten Ausführungsform können einzelne Komponenten der Anschlussboxen, insbesondere deren Datennetzwerk-Switche, auch dann in Betrieb bleiben, wenn die Energiekabel keine Versorgungsspannung führen. Dazu ist es besonders vorteilhaft, wenn das Datennetzwerk eine entsprechende Stromversorgung über die Datenkabel vorsieht. Auch ist eine externe Stromversorgung für die Anschlussboxen denkbar, die eine entsprechende Versorgungsleitung umfasst, welche beispielsweise zusammen mit den Datenkabeln zu den Anschlussboxen verlegt sein kann. Die externe Stromversorgung kann ein externes Kleinspannungsnetzteil, insbesondere ein 24V-Netzteil, umfassen, das seinerseits aus einer separaten Stromquelle gespeist wird, wobei diese weitere Stromquelle von der Energieversorgungseinrichtung derart getrennt sein kann, dass sie auch dann in Betrieb ist, wenn die Energieversorgungseinrichtung abgeschaltet ist.

In einer weiteren bevorzugten Ausführungsform ist vorgesehen, dass die Anschlussboxen bei Eintritt bestimmter Ereignisse, beispielsweise beim Messen eines besonders außergewöhnlichen Wertes für eine elektrische Größe, aktiv entsprechende Daten, insbesondere dafür vorgesehene Nachrichten, bevorzugt Warnhinweise, an die Rechnereinheit senden.

In einer andern vorteilhaften Ausführungsform besitzen die Anschlussboxen jeweils ein eigenes Kleinspannungsnetzteil, bevorzugt ein 24V-Netzteil, zur Versorgung ihrer internen Komponenten, beispielsweise der Messmittelbaugruppe, des Datennetzwerk-Switches und der Modulations-/Demodulationseinrichtung. Dieses Netzteil kann seine Versorgungsspannung von einem der Energieanschlüsse der Anschlussbox beziehen. Die Anschlussbox kann auch externe Anschlüsse dieses Kleinspannungsnetzteils aufweisen, durch die das Kleinspannungsnetzteil beispielsweise sowohl zur Stromversorgung anzuschließender externer Kleinspannungsverbraucher als auch zum Betrieb eines externen elektrisch betätigbaren Schaltgeräts vorgesehen ist.

In einer bevorzugten Ausführungsform erfüllt das Datennetzwerk den Ethernet-Standard.

In einer weiteren Ausführungsform verwendet das Datennetz drahtlose Übertragungsverfahren. Insbesondere kann es sich bei dem Datennetzwerk um ein WLAN-Netz handeln. Dementsprechend können die Boxen-Datennetzwerkanschlüsse jeder Anschlussbox durch eine WLAN-Schnittstelle ersetzt oder ergänzt werden.

In einer weiteren Ausführungsform kann sich die Datenübertragung über die Energiekabel an entsprechende bekannte Standards, beispielsweise an den Powerline-Standard, anlehnen.

In einer weiteren Ausführungsform handelt es sich bei den Energiekabeln um sogenannte "Hybridkabel", die sich dadurch auszeichnen, dass sie sowohl entsprechende Energieleitungen als auch entsprechende integrierte Datenleitungen aufweisen.

In einer weiteren bevorzugten Bauform weist das Energienetz zusätzlich einen oder mehrere sogenannte "Repeater" zur Verstärkung der Datensignale auf, die ähnlich wie eine Anschlussbox aufgebaut und an das Energienetz angeschlossen, jedoch mit nur zwei elektrischen Energieanschlüssen ausgebildet sind.

Besonders vorteilhaft ist es, wenn die Anschlussbox eine Messmittelbaugruppe aufweist. Diese Messmittelbaugruppe ist dafür vorgesehen, elektrische Größen wie beispielsweise Strom, Spannung und Leistung zu ermitteln. Insbesondere kann diese Messmittelbaugruppe eine Recheneinheit aufweisen, durch die sie zur Berechnung der Wirkleistung sowie der Effektivwerte der Spannung und des Stroms an den Energieanschlüssen der Anschlussbox geeignet ist. Dazu sind in mehreren Zweigen der Energieleitung Messpunkte vorgesehen, die über Messleitungen elektrisch leitend mit der Messmittelbaugruppe verbunden sind. Weist die Energieleitung eine Anzahl n von Verzweigungen auf, so können genau n-1 Messpunkte vorgesehen sein. Die Messmittelbaugruppe kann mit ihrer Recheneinheit die elektrischen Größen in dem verbleibenden Zweig, welcher keinen Messpunkt aufweist, berechnen.

Weiterhin kann die Messmittelbaugruppe mit ihrer Recheneinheit die Wirkleistung sowie der Effektivwerte von Spannung und Strom aus den Messwerten errechnen. Dies ist besonders vorteilhaft, um die Datenrate bei einer Übertragung dieser elektrischen Größen an die Rechnereinheit gering zu halten.

Wenn es sich bei der boxeninternen, sich verzweigenden Energieleitung um eine Drehstromleitung handelt, ist es vorteilhaft, wenn jeder Messpunkt drei Untermesspunkte aufweist, die in den drei verschiedenen Phasen der Energieleitung angeordnet sind, weil dadurch die elektrischen Größen jeder Phase ermittelt werden können.

Weiterhin ist es vorteilhaft, wenn die Anschlussbox an mindestens einem Energieanschluss eine elektrische Sicherung oder zumindest einen Anschluss für eine elektrische Sicherung oder einen entsprechenden elektromechanischen Schalter aufweist, denn dadurch ist es möglich verschiedene Energiekabel unterschiedlich abzusichern bzw. durch Abschaltung zu trennen um beispielsweise in einzelnen Zweigen einer Baumstruktur Energiekabel mit kleineren Querschnitten verwenden zu können als in der Hauptverteilung.

In einer vorteilhaften Weiterbildung besitzt die Anschlussbox eine Speichereinheit, in der sie unter Anderem die von ihr ermittelten Werte für die elektrischen Größen speichern kann. Weiterhin kann der Speicher auch die Sollwerte für die elektrischen Größen speichern. Dies hat den Vorteil, dass diese Anschlussbox auch als autarke Einheit ohne weitere Anschlussboxen und/oder ohne Rechnereinheit nutzbar ist. Dadurch kann bei einer Netzwerkstörung das Ermitteln elektrischer Größen fortgesetzt werden. Die entsprechenden Daten können dann beispielsweise später zur Auswertung an die zu diesem Zweck daran anzuschließende Rechnereinheit übertragen werden. Auch kann so eine Gruppe von Anschlussboxen ohne Rechnereinheit betrieben werden. Dann besteht das Energienetz aus Anschlussboxen, die über Energiekabel und bevorzugt auch über Datenkabel aneinander angeschlossen sind. Eine der Anschlussboxen, z.B. die erste Anschlussbox, kann dabei eine administrierende Funktion ausüben und so die Rechnereinheit zwischenzeitlich oder ständig ersetzen. Aus Kompatibilitätsgründen kann jede Anschlussbox dazu geeignet sein, diese Funktion auszuüben.

Das Verfahren zum Betrieb des Energienetzes umfasst eine Topologieerkennung. Diese Topologieerkennung umfasst die direkte Nachbarschaftserkennung zwischen einander direkt benachbarten Anschlussboxen. Dadurch erhalten die einzelnen Anschlussboxen Informationen über die Identität der mindestens einen ihr direkt benachbarten Anschlussbox. Diese Informationen werden auf Anfrage der Rechnereinheit zusammen mit der eigenen Identität der jeweiligen Anschlussbox über die Energiekabel und/oder über das Datennetzwerk an die Rechnereinheit übertragen. Die Rechnereinheit bildet auf der Basis dieser Informationen, die sie bevorzugt von allen Anschlussboxen erhält, mit einem in ihrer Software enthaltenen Sortieralgorithmus die Topologie des Energienetzes ab. Dabei wird die Übertragung redundanter Daten in Kauf genommen. Alternativ dazu können die einander direkt benachbarten Anschlussboxen untereinander aushandeln, welche von ihnen ihre gemeinsame Nachbarschaftsbeziehung an die Rechnereinheit überträgt. Dadurch können Übertragungskapazitäten eingespart werden.

Vorteilhafterweise wird die Topologieerkennung regelmäßig, d.h. in regelmäßigen zeitlichen Abständen, z.B. in zeitlichen Intervallen von weniger als 10 Sekunden, insbesondere weniger als 5 Sekunden, besonders bevorzugt 3 Sekunden, wiederholt, wobei nach jeder Topologieerkennung jede Anschlussbox ihren Anschluss an das Datennetzwerk überprüft, woraufhin entweder bei nicht angeschlossenem Datennetzwerk die zu einer Aufrechterhaltung von Basisfunktionen des Energienetzes zu übertragende Daten über die jeweiligen Energieanschlüsse und die entsprechenden Energiekabel übertragen werden, oder bei angeschlossenem Datennetzwerk die zu der Aufrechterhaltung von Basisfunktionen des Energienetzes zu übertragenden Daten bevorzugt über das Datennetzwerk übertragen werden.

Dabei gehört die Topologieerkennung zu den Basisfunktionen des Energienetzes. Weiterhin findet auch eine Übertragung der Werte elektrischer Größen wie Strom, Spannung und Leistung von einzelnen Anschlussboxen an die Rechnereinheit statt und kann ebenfalls zu den Basisfunktionen des Energienetzes zählen. Besonders vorteilhaft ist es, bereits in der Anschlussbox, insbesondere in der Messmittelbaugruppe, die Effektivwerte bestimmter elektrischen Größen, insbesondere von Strom und Spannung, sowie die Wirkleistung für jeden elektrischen Anschluss zu bestimmen und diese Werte an die Rechnereinheit zu übertragen, weil dadurch Übertragungskapazitäten eingespart werden.

Wenn nur einige Anschlussboxen an das Datennetzwerk angeschlossen sind, andere Anschlussboxen aber nicht an das Datennetzwerk angeschlossen sind, dann können Daten beispielsweise zwischen einigen Anschlussboxen über Datenkabel und zwischen anderen Anschlussboxen über Energiekabel übertragen werden.

In einer vorteilhaften Ausgestaltung werden bei angeschlossenem Datenkabel auch weitere Daten über das Datennetzwerk übertragen, beispielsweise Daten mit verhältnismäßig hoher Datenkapazität, z.B. Videodaten einer Überwachungskamera oder Automatisierungsdaten für angeschlossene Verbraucher.

In der Rechnereinheit kann zusätzlich zu den Topologieinformationen jede Anschlussbox in der Rechnereinheit mit einem Namen eindeutig bezeichnet werden. Vorteilhafterweise kann diese Bezeichnung einen Hinweis auf einen an die Anschlussbox angeschlossenen Verbraucher geben.

So kann die Rechnereinheit den Namen jeder Anschlussbox einer MAC-Adresse des Datennetzwerk-Switches dieser Anschlussbox zuordnen und in einer zur Rechnereinheit gehörenden Datenbank speichern. Weiterhin ist es vorteilhaft, wenn die Rechnereinheit die Werte der elektrischen Größen jeder Anschlussbox dem jeweiligen Namen dieser Anschlussbox und damit deren MAC-Adresse zuordnet. Dies hat den Vorteil, dass das System auch nach einer Abschaltung, einem Herunterfahren oder einem Systemabsturz die bereits gespeicherten Daten weiterhin der dazugehörigen Anschlussbox zuordnen kann.

Weiterhin ist es vorteilhaft, dass mit diesem System durch eine erneute Topologieerkennung und einen Vergleich zwischen der neu abgebildeten und der abgespeicherten Topologie Veränderungen der Topologie erkannt werden können. Dementsprechend kann ein Warnhinweis erfolgen, der nicht nur die Information beinhaltet, dass sich die Topologie geändert hat, sondern auch, an welcher Stelle diese Änderung eingetreten ist und welcher Art sie ist.

In diesem Zusammenhang ist es besonders vorteilhaft, wenn das Energienetz eine Ringstruktur aufweist, d.h. ein Energieanschluss einer Anschlussbox auf dem Umweg über mehrere andere Anschlussboxen an einen weiteren Energieanschluss derselben Anschlussbox angeschlossen ist. Dadurch kommt ein einzelner Fehler in der Ringstruktur der Energieverkabelung zwar nicht sofort zum tragen, weil die Energieverteilung einen alternativen Weg besitzt, kann aber durch die direkte Nachbarschaftserkennung erkannt und dementsprechend behoben werden, bevor in der Ringstruktur möglicherweise ein zweiter Fehler auftritt. Dies gilt in besonderem Maße für Gleich- und Wechselstromnetze, weil diese lediglich eine stromführende Ader aufweisen, auf welcher auch die Daten übertragen werden.

Zum Messen, Auswerten, Diagnostizieren und Administrieren des Energienetzes ist es besonders vorteilhaft, eine regelmäßige Berechnung des Energieverbrauchs an den einzelnen Anschlussboxen durch die Rechnereinheit sowie eine regelmäßige Berechnung des Gesamtenergieverbrauchs durch die Rechnereinheit durchzuführen, weil auf diese Weise nicht nur die Kosten des Gesamtenergieverbrauchs abgeschätzt werden können, sondern auch analysiert werden kann, auf welchen Verbraucher ein besonders hoher Energieverbrauch gegebenenfalls zurückzuführen ist, bzw. in welchem Energiezweig ein besonders hoher Energieverbrauch existiert.

Weiterhin können entbehrliche Verbraucher definiert und abgeschaltet werden, sobald die Gesamtenergie einen festzulegenden Referenzwert überschreitet.

Des Weiteren können auch für einzelne Anschlussboxen Einzelreferenzwerte festgelegt werden, bei deren Überschreiten beispielsweise eine Anzeige, ein Signal oder ein Alarm ausgelöst werden kann.

Besonders vorteilhaft ist es, die Spannung an zwei miteinander über ein Energiekabel verbundenen elektrischen Energieanschlüssen zweier einander direkt benachbarter Anschlussboxen zu vergleichen. Wenn diese Spannungsdifferenz einen bestimmten Wert überschreitet, dann wird dies als deutliches Indiz für einen Anschlussfehler gewertet, beispielsweise für einen besonders hohen Übergangswiderstand, ein defektes oder fehlendes Kabel. Daraufhin kann ein entsprechendes optisches oder akustisches Warnsignal, eine entsprechende Anzeige auf einem Monitor des Rechners oder ein vergleichbarer Alarm ausgelöst werden, so dass der Fehler schnell behoben werden kann oder sogar so frühzeitig erkannt wird, dass er behoben wird, noch bevor er tatsächlich eintritt, beispielsweise, wenn ein Energiekabel sich unerwünschterweise aus seiner Arretierung löst.

### Ausführungsbeispiel

Ein Ausführungsbeispiel der Erfindung ist in der Zeichnung dargestellt und wird im Folgenden näher erläutert. Es zeigen:
Fig.1a ein linear aufgebautes Energienetz mit einem minimal angeschlossenen Datennetzwerk;
Fig.1b das linear aufgebaute Energienetz mit einer Verkabelung des minimal angeschlossen Datennetzwerks;
Fig.2a das linear aufgebautes Energienetz mit einem vollständig angeschlossenen Datennetzwerk;
Fig.2b das linear aufgebaute Energienetz mit einer Verkabelung des vollständig angeschlossenen Datennetzwerks;
Fig.3a das linear aufgebaute Energienetz mit einem teilweise angeschlossenem Datennetzwerk;
Fig.3b das linear aufgebaute Energienetz mit einer Verkabelung des teilweise angeschlossenen Datennetzwerks;
Fig.4 ein Energienetz mit einer ersten Baumstruktur;
Fig.5 ein Energienetz mit einer zweiten Baumstruktur;
Fig. 6 ein Energienetz mit einer Ringstruktur;
Fig.7 ein Blockschaltbild einer Anschlussbox;
Fig.8 eine Anschlussbox mit einem über ein externes Schaltgerät angeschlossenen Verbraucher;
Fig.9 ein Energienetz mit einer schaltbaren Ringstruktur;
Fig.10 ein Ablaufdiagramm zur Veranschaulichung eines Verfahrens zum Betrieb des Energienetzes.

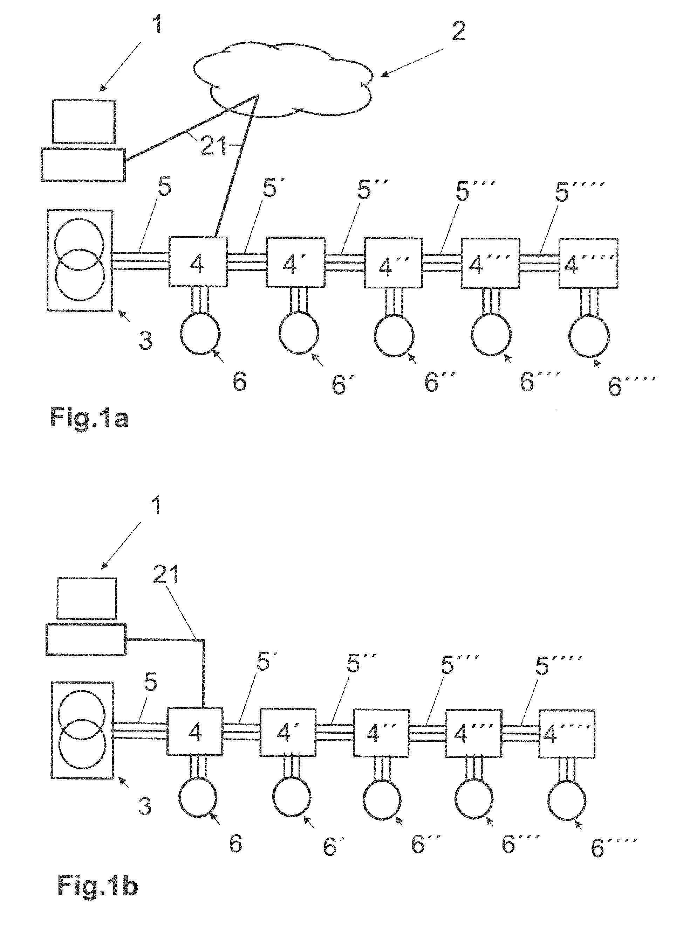

Die Fig.1a stellt ein linear aufgebautes Energienetz mit einem dazugehörigen ersten Datennetzwerk 2 dar. In der Fig.1b ist auch das Datennetzwerk 2 in einer möglichen, geeigneten Verkabelung explizit dargestellt. Bei dieser Verkabelung handelt es sich ausschließlich um ein einzelnes Datenkabel 21, mit dem eine erste Anschlussbox 4 an eine Rechnereinheit 1 angeschlossen ist. Diese erste Anschlussbox 4 erfüllt gegenüber dem weiteren Energienetz die Funktion eines Gateways.

Die Topologie dieses Energienetzes ergibt sich aus der folgenden Verkabelung über die Energiekabel 5,5',5",5"',5"":
Die erste Anschlussbox 4 ist über ein erstes Energiekabel 5 an eine externe Energieversorgungseinrichtung 3 angeschlossen. Zusätzlich ist die erste Anschlussbox 4 über ein zweites Energiekabel 5' an eine zweite Anschlussbox 4' angeschlossen. Die zweite Anschlussbox 4' ist mit einem dritten Energiekabel 5" an die dritte Anschlussbox 4" angeschlossen, welche ihrerseits mit einem vierten Energiekabel 5"' an die vierte Anschlussbox 4"' angeschlossen ist. Die vierte Anschlussbox 4"' ist letztlich mit einem fünften Energiekabel 5"" an die fünfte Anschlussbox 4"" angeschlossen, welche sich am Ende der Kette befindet und somit an keine weitere Anschlussbox angeschlossen ist. Jede der Anschlussboxen ist zusätzlich mit jeweils einem weiteren Energiekabel (nicht bezeichnet) an jeweils einen Verbraucher 6,6',6",6"',6"" angeschlossen.

Daraus ergeben sich die folgenden direkten Nachbarschaftsbeziehungen: Die erste Anschlussbox 4 besitzt als direkten Nachbarn die zweite Anschlussbox 4'. Die zweite Anschlussbox 4' besitzt als direkte Nachbarn die erste Anschlussbox 4 und die dritte Anschlussbox 4". Die dritte Anschlussbox 4" besitzt als direkte Nachbarn die zweite Anschlussbox 4' und die vierte Anschlussbox 4"'. Die vierte Anschlussbox 4"' besitzt als direkte Nachbarn die dritte Anschlussbox 4" und die fünfte Anschlussbox 4"". Die fünfte Anschlussbox 4"" besitzt als direkten Nachbarn die vierte Anschlussbox 4"'.

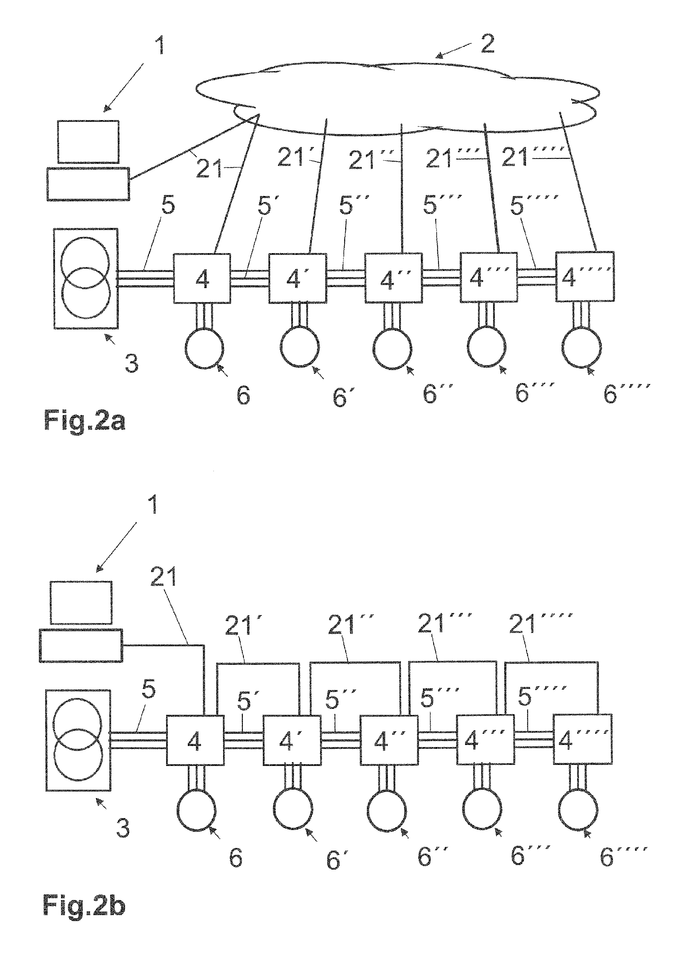

In der Fig. 2a ist das vorgenannte, linear aufgebaute Energienetz, d.h. mit gleicher Topologie wie im vorgenannten Beispiel, in gleicher Weise dargestellt, wobei jedoch nicht nur die erste Anschlussbox 4 sondern sämtliche Anschlussboxen 4,4',4",4"',4"" über die entsprechenden Datenkabel 21,21',21",21"',21"" an das Datennetzwerk 2 angeschlossen sind.

In der Fig. 2b ist eine mögliche, dazu geeignete Verkabelung des Datennetzwerks 2 explizit dargestellt. Dabei ist die erste Anschlussbox 4 nicht nur mit dem ersten Datenkabel 21 an die Rechnereinheit 1, sondern zusätzlich mit einem zweiten Datenkabel 21' an die zweite Anschlussbox 4' angeschlossen. Die zweite Anschlussbox 4' ist mit einem dritten Datenkabel 21" an die dritte Anschlussbox 4" angeschlossen, welche ihrerseits mit einem vierten Datenkabel 21'" an die vierte Anschlussbox 4"' angeschlossen ist. Die vierte Anschlussbox 4"' ist letztlich an die fünfte Anschlussbox 4"" angeschlossen, welche das Ende dieser Kette repräsentiert und somit an keine weitere Anschlussbox angeschlossen ist.

Die Topologie dieses Energienetzes ergibt sich aus der folgenden Verkabelung über die Energiekabel 5,5',5",5"',5"" :
Die erste Anschlussbox 4 ist über das erste Energiekabel 5 an die externe Energieversorgungseinrichtung 3 angeschlossen. Zusätzlich ist die erste Anschlussbox 4 über das zweites Energiekabel 5' an die zweite Anschlussbox 4' angeschlossen. Die zweite Anschlussbox 4' ist mit dem dritten Energiekabel 5" an die dritte Anschlussbox 4" angeschlossen, welche ihrerseits mit dem vierten Energiekabel 5"' an die vierte Anschlussbox 4"' angeschlossen ist. Die vierte Anschlussbox 4"' ist letztlich mit dem fünften Energiekabel 5"" an die fünfte Anschlussbox 4"" angeschlossen, welche sich am Ende der Kette befindet und somit an keine weitere Anschlussbox angeschlossen ist. Jede der Anschlussboxen ist zusätzlich mit jeweils einem weiteren Energiekabel (nicht bezeichnet) an jeweils einen Verbraucher 6,6',6",6"',6"" angeschlossen.

Daraus ergeben sich die folgenden direkten Nachbarschaftsbeziehungen: Die erste Anschlussbox 4 besitzt als direkten Nachbarn die zweite Anschlussbox 4'. Die zweite Anschlussbox 4' besitzt als direkte Nachbarn die erste Anschlussbox 4 und die dritte Anschlussbox 4". Die dritte Anschlussbox 4" besitzt als direkte Nachbarn die zweite Anschlussbox 4' und die vierte Anschlussbox 4"'. Die vierte Anschlussbox 4"' besitzt als direkte Nachbarn die dritte Anschlussbox 4" und die fünfte Anschlussbox 4"". Die fünfte Anschlussbox 4"" besitzt als direkten Nachbarn die vierte Anschlussbox 4"'.

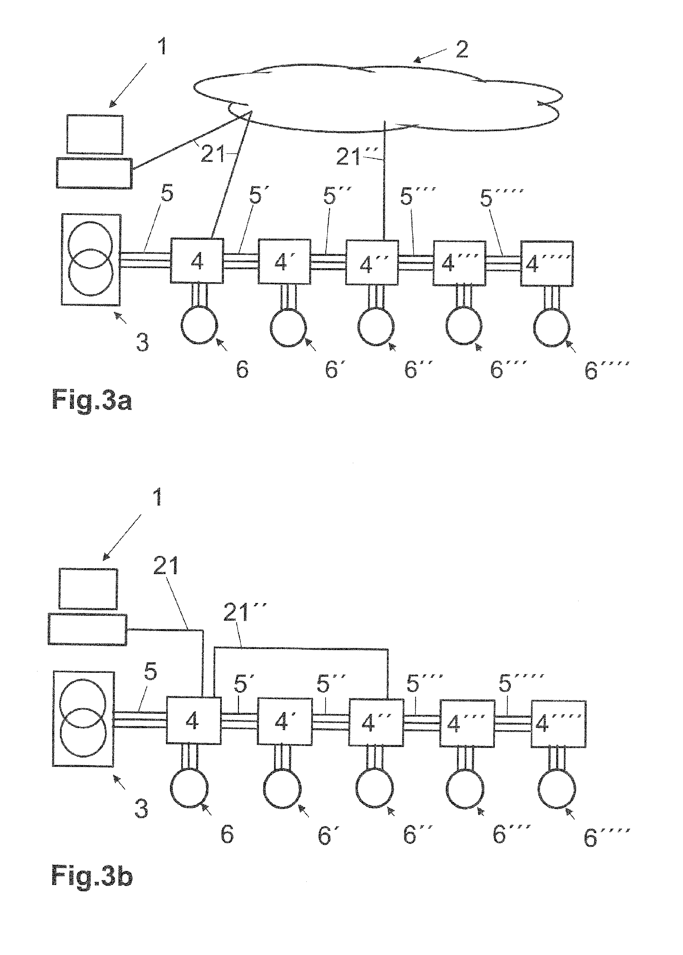

Die Fig.3a stellt das linear aufgebaute Energienetz, d.h. mit gleicher Topologie wie bei den beiden vorgenannten Beispielen, aber mit einem teilweise angeschlossenem Datennetzwerk 2 in gleicher Weise dar. Dabei sind die Anschlussboxen 4 und 4" mit je einem Datenkabel 21, 21" an das Datennetzwerk 2 angeschlossen.

In der Fig.3b ist eine mögliche, dazu geeignete Verkabelung des Datennetzwerks explizit dargestellt. Dabei ist die erste Anschlussbox 4 sowohl mit dem ersten Datenkabel 21 an die Rechnereinheit 1 als auch mit dem dritten Datenkabel 21" an die dritte Anschlussbox 4" angeschlossen.

Die Topologie dieses Energienetzes ergibt sich aus der folgenden Verkabelung über die Energiekabel 5,5',5",5"',5"":
Die erste Anschlussbox 4 ist über das erste Energiekabel 5 an die externe Energieversorgungseinrichtung 3 angeschlossen. Zusätzlich ist die erste Anschlussbox 4 über das zweites Energiekabel 5' an die zweite Anschlussbox 4' angeschlossen. Die zweite Anschlussbox 4' ist mit dem dritten Energiekabel 5" an die dritte Anschlussbox 4" angeschlossen, welche ihrerseits mit dem vierten Energiekabel 5"' an die vierte Anschlussbox 4"' angeschlossen ist. Die vierte Anschlussbox 4"' ist letztlich mit dem fünften Energiekabel 5"" an die fünfte Anschlussbox 4"" angeschlossen, welche sich am Ende der Kette befindet und somit an keine weitere Anschlussbox angeschlossen ist. Jede der Anschlussboxen ist zusätzlich mit jeweils einem weiteren Energiekabel (nicht bezeichnet) an jeweils einen Verbraucher 6,6',6",6"',6"" angeschlossen.

Daraus ergeben sich die folgenden direkten Nachbarschaftsbeziehungen:

Die erste Anschlussbox 4 besitzt als direkten Nachbarn die zweite Anschlussbox 4'. Die zweite Anschlussbox 4' besitzt als direkte Nachbarn die erste Anschlussbox 4 und die dritte Anschlussbox 4". Die dritte Anschlussbox 4" besitzt als direkte Nachbarn die zweite Anschlussbox 4' und die vierte Anschlussbox 4"'. Die vierte Anschlussbox 4"' besitzt als direkte Nachbarn die dritte Anschlussbox 4" und die fünfte Anschlussbox 4"". Die fünfte Anschlussbox 4"" besitzt als direkten Nachbarn die vierte Anschlussbox 4"'.

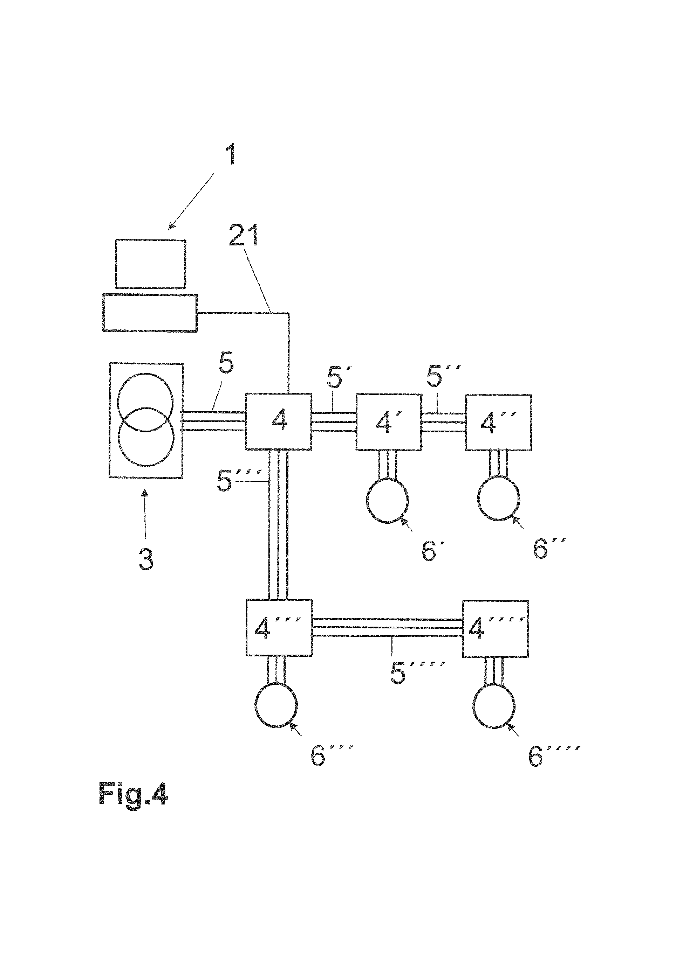

Die Fig.4 stellt ein Energienetz dar, dessen Topologie eine erste Baumstruktur aufweist.

Die Topologie dieses Energienetzes ergibt sich aus der folgenden Verkabelung über die Energiekabel 5,5',5",5"',5"":
Die externe Energieversorgungseinrichtung 3 ist über das erste Energiekabel 5 an die erste Anschlussbox 4 angeschlossen. Die erste Anschlussbox 4 ist mit dem zweiten Energiekabel 5' an die zweite Anschlussbox 4' angeschlossen. Weiterhin ist die erste Anschlussbox 4 mit dem vierten Energiekabel 5"' an die vierte Anschlussbox 4"' angeschlossen. Die zweite Anschlussbox 4' ist mit dem dritten Energiekabel 5" an die dritte Anschlussbox zu angeschlossen. Die vierte Anschlussbox 4"' ist mit dem fünften Energiekabel 5"" an die fünfte Anschlussbox 4"" angeschlossen.

Daraus ergeben sich die folgenden direkten Nachbarschaftsbeziehungen: Die erste Anschlussbox 4 besitzt als direkte Nachbarn die zweite Anschlussbox 4' und die vierte Anschlussbox 4"". Die zweite Anschlussbox 4' besitzt als direkte Nachbarn die erste Anschlussbox 4 und die dritte Anschlussbox 4". Die vierte Anschlussbox 4"' besitzt als direkte Nachbarn die erste Anschlussbox 4 und die fünfte Anschlussbox 4"". Die fünfte Anschlussbox 4"" besitzt als direkten Nachbarn die vierte Anschlussbox 4"'.

Somit ist die erste Anschlussbox 4 insgesamt an zwei direkt benachbarte Anschlussboxen 4',4"' und an die Energieversorgungseinrichtung 3 angeschlossen und erzeugt eine Baumstruktur.

An die erste Anschlussbox 4 ist kein Verbraucher angeschlossen. An alle weiteren Anschlussboxen 4', 4", 4"', 4"" ist jeweils ein Verbraucher 6',6",6"',6"" über jeweils ein nicht bezeichnetes Energiekabel angeschlossen.

Zur Vollständigkeit ist auch die Rechnereinheit 1 dargestellt, die über ein Datenkabel 21 an die erste Anschlussbox 4 angeschlossen ist.

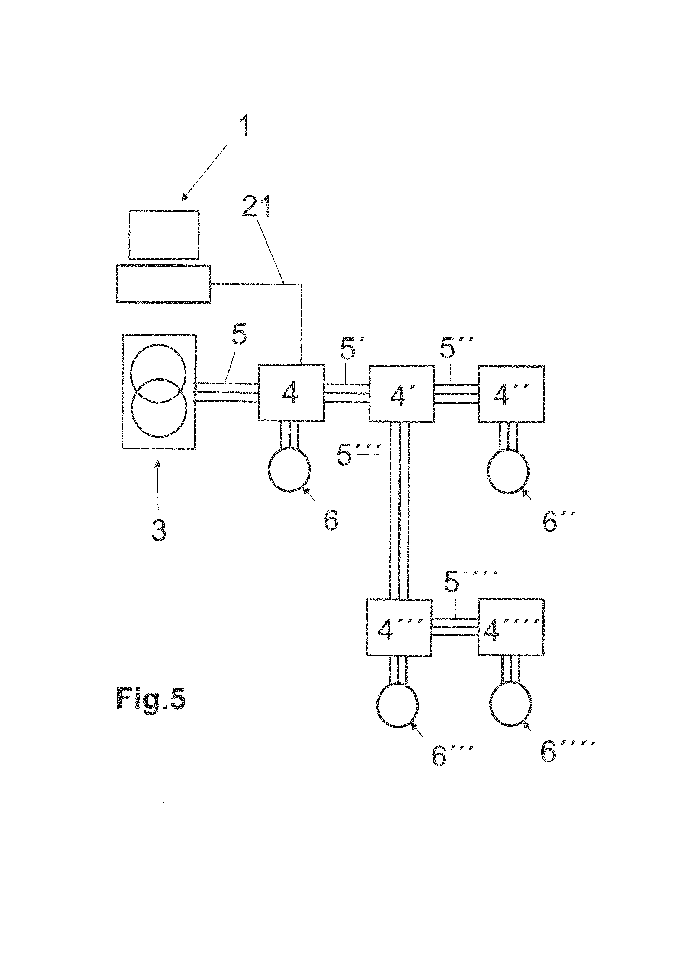

Die Fig.5 stellt ein Energienetz mit einer zweiten Baumstruktur dar.

Die Topologie dieses Energienetzes ergibt sich aus der folgenden Verkabelung über die Energiekabel 5,5',5",5"',5"":
Die externe Energieversorgungseinrichtung 3 ist über das erste Energiekabel 5 an die erste Anschlussbox 4 angeschlossen. Die erste Anschlussbox 4 ist dabei mit dem Energiekabel 5' an die zweite Anschlussbox 4' angeschlossen. Die zweite Anschlussbox 4' ist mit dem dritten Energiekabel 5" an die dritte Anschlussbox 4" angeschlossen. Weiterhin ist die zweite Anschlussbox mit dem vierten Energiekabel 5"' an die vierte Anschlussbox 4"' angeschlossen. Die vierte Anschlussbox 4"' ist mit dem fünften Energiekabel 5"" an die fünfte Anschlussbox 4"" angeschlossen. Somit ist die zweite Anschlussbox 4' insgesamt an drei direkt benachbarte Anschlussboxen 4, 4",4"' angeschlossen und erzeugt eine Baumstruktur.

Daraus ergeben sich die folgenden direkten Nachbarschaftsbeziehungen: Die erste Anschlussbox 4 besitzt als direkten Nachbarn die zweite Anschlussbox 4'. Die zweite Anschlussbox 4' besitzt als direkte Nachbarn die erste Anschlussbox 4, die vierte Anschlussbox 4"' und die dritte Anschlussbox 4". Die dritte Anschlussbox 4" besitzt als direkten Nachbarn die zweite Anschlussbox 4'. Die vierte Anschlussbox 4"' besitzt als direkte Nachbarn die zweite Anschlussbox 4' und die fünfte Anschlussbox 4"". Die fünfte Anschlussbox 4"" besitzt als direkten Nachbarn die vierte Anschlussbox 4"'.

An die zweite Anschlussbox 4' ist kein Verbraucher angeschlossen. An alle weiteren Anschlussboxen 4, 4", 4"', 4"" ist jeweils ein Verbraucher 6,6",6"',6"" über jeweils ein nicht bezeichnetes Energiekabel angeschlossen.

Zur Vollständigkeit ist auch die Rechnereinheit 1 dargestellt, die über ein Datenkabel 21 an die erste Anschlussbox 4 angeschlossen ist.

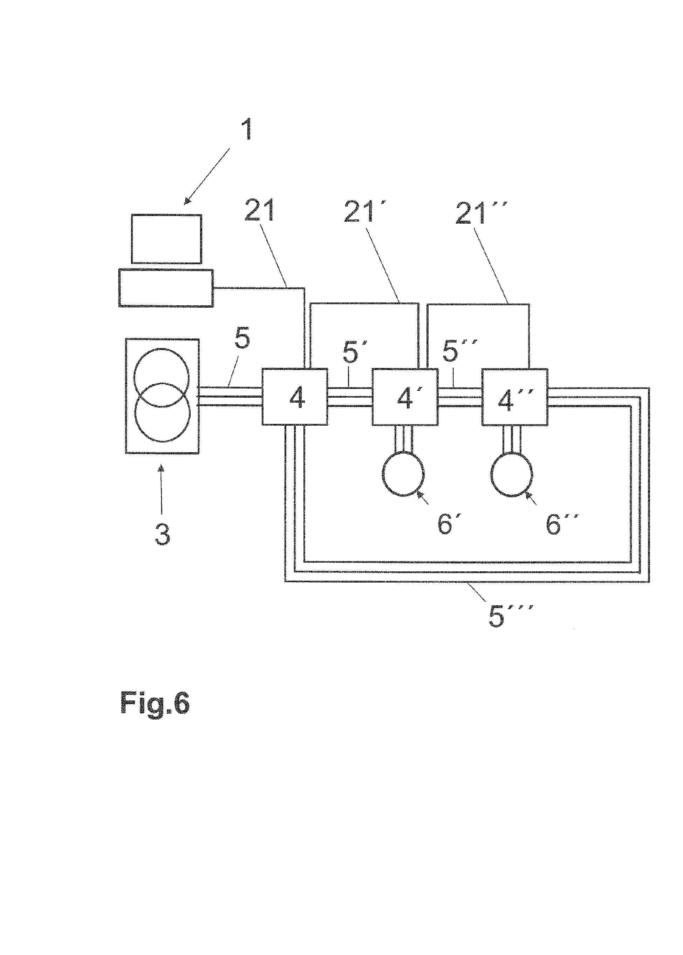

Die Fig. 6 stellt ein Energienetzwerk mit einer Ringstruktur dar.

Die Topologie dieses Energienetzes ergibt sich aus der folgenden Verkabelung über die Energiekabel 5,5',5",5"',5"":
Die externe Energieversorgungseinrichtung 3 ist über das erste Energiekabel 5 an die erste Anschlussbox 4 angeschlossen. Die erste Anschlussbox 4 ist mit einem zweiten Energiekabel 5' an eine zweite Anschlussbox 4' angeschlossen. Die zweite Anschlussbox 4' ist über ein drittes Energiekabel 5" an eine dritte Anschlussbox 4" angeschlossen. Die dritte Anschlussbox ist über ein viertes Energiekabel 5"' wiederum an die erste Anschlussbox 4 angeschlossen. Der so entstehende Ring lässt sich durch das Hinzufügen weiterer Anschlussboxen beliebig erweitern.

Daraus ergeben sich die folgenden direkten Nachbarschaftsbeziehungen:
Die erste Anschlussbox 4 besitzt als direkte Nachbarn die zweite Anschlussbox 4'und die dritte Anschlussbox 4". Die zweite Anschlussbox 4' besitzt als direkte Nachbarn die erste Anschlussbox 4 und die dritte Anschlussbox 4".
Die dritte Anschlussbox 4" besitzt als direkte Nachbarn die zweite Anschlussbox 4' und die erste Anschlussbox 4.

Zur Vollständigkeit ist auch die Rechnereinheit 1 dargestellt, die über ein Datenkabel 21 an die erste Anschlussbox 4 angeschlossen ist. Die erste Anschlussbox 4 ist über ein zweites Datenkabel z an die zweite Anschlussbox 4'angeschlossen. Die zweite Anschlussbox 4' ist über ein drittes Datenkabel 21" an die dritte Anschlussbox 4" angeschlossen.

Weiterhin sind beispielsweise auch vermaschte Netze möglich, in denen eine Kombination aus Baum-, Ring- und linearen Strukturen realisiert werden kann.

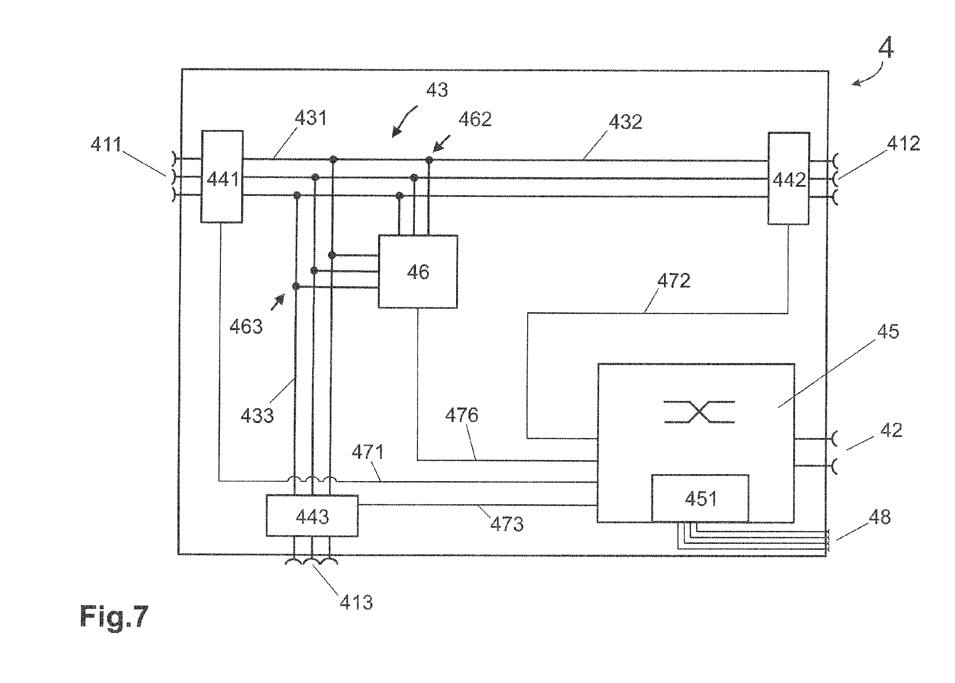

Die Fig.7 stellt ein Blockschaltbild einer erfindungsgemäßen Anschlussbox 4 exemplarisch für alle Anschlussboxen 4,4',4",4"',4"" dar. Aus Übersichtlichkeitsgründen werden im Folgenden die Bezugszeichen der ersten Anschlussbox 4 daher auch für die anderen Boxen 4',4",4"',4"" verwendet.

Die Anschlussbox 4 besitzt somit einen ersten Energieanschluss 411, einen zweiten Energieanschluss 412 und einen dritten Energieanschluss 413, die jeweils zum Anschluss von Energiekabeln 5,5',5",5"',5"" vorgesehen sind. Die Energieanschlüsse 411,412,413 sind über eine interne Energieleitung 43 leitend miteinander verbunden. Die Energieleitung 43 weist drei Zweige 431,432,433 auf, die über je eine Modulations-/Demodulationseinrichtung 441,442,443 an die Energieanschlüsse 411,412,413 angeschlossen sind.

An zwei Energiezweigen 432,433 weist die Anschlussbox je einen Messpunkt 462,463 auf. Im vorliegenden Ausführungsbeispiel handelt es sich bei den Energiekabeln 5,5',5",5"',5"" um Drehstromkabel, bei den Energieanschlüssen 411,412,413 um Drehstromanschlüsse und bei der Energieleitung 43 um eine Drehstromleitung, so dass jeder Messpunkt 462,463 drei Untermesspunkte, nämlich einen für jede Phase der Energieleitung 43, besitzt. Diese Untermesspunkte sind in der Zeichnung nicht näher bezeichnet.

An diese beiden Messpunkte 462,463, d.h. an deren Untermesspunkte, ist eine Messmittelbaugruppe 46 angeschlossen.

Dementsprechend brauchen auch die Modulations-/Demodulationseinrichtungen 441,442,443 an nur eine oder zwei der drei Phasen der jeweiligen Energieanschlüsse 411,412,413 angeschlossen zu sein. Im vorliegenden Fall sind die Modulations-/Demodulationseinrichtungen 441,442,443 an zwei Phasen der Energieanschlüsse 411,412,413 angeschlossen und sorgen so für eine symmetrische Datenübertragung. Die dritte Phase des jeweiligen Energieanschlusses 411,412,413 wird mechanisch ohne elektrischen Anschluss an die jeweilige Modulations-/Demodulationseinrichtung 441,442,443 durch diese 441,442,443 hindurchgeführt und direkt an die entsprechende dritte Phase der Energieleitung 43 angeschlossen.

Weiterhin besitzt die Anschlussbox 4 einen Datennetzwerk-Switch 45 mit zwei externen Boxen-Datennetzwerkanschlüssen 42, welche zum Anschluss von Datenkabeln 21,21',21",21"',21"" vorgesehen sind.

Der Datennetzwerk-Switch 45 ist über einen Datenbus mit vier Datenbusleitungen 471,472,473,476, bevorzugt handelt es sich dabei um einen I2C-Bus, an die drei Modulations-/Demodulationseinrichtungen 441,442,443 sowie an die Messmittelbaugruppe 46 angeschlossen.

Weiterhin weist die Anschlussbox 4 ein Kleinspannungsnetzteil, bevorzugt ein 24V-Netzteil, auf, das in der Zeichnung aus Übersichtlichkeitsgründen nicht dargestellt wird. Mit diesem Kleinspannungsnetzteil können interne Komponenten der Anschlussbox 4, insbesondere die Messmittelbaugruppe 46, der Datennetzwerk-Switch 45 sowie die Modulations-/Demodulationseinrichtungen 441,442,443 mit zu deren Betrieb notwendiger elektrischer Energie versorgt werden.

Boxenseitig weisen die Modulations-/Demodulationseinrichtungen 441,442,443 jeweils mindestens einen elektrischen Filter, bevorzugt einen Tiefpassfilter, insbesondere pro angeschlossener Phase jeweils einen Tiefpassfilter, auf. Dieser besteht besonders bevorzugt in einer in Reihe geschalteten Induktivität, die bevorzugt boxenseitig über eine Kapazität an die Masse angeschlossen ist. Durch den elektrischen Filter wird eine Datenübertragung auf der Energieleitung 43 verhindert. Beispielsweise kann von dem ersten Energieanschluss 411 an den zweiten Energieanschluss 412 der ersten Anschlussbox 4 keine Datenübertragung über die Energieleitung 43 stattfinden. Falls jedoch eine Datenübertragung von beispielsweise dem ersten Energieanschluss 411 an den zweiten Energieanschluss 412 gewünscht ist, kann der Datennetzwerk-Switch 45 die entsprechenden Daten von der ersten Modulations-/Demodulationseinrichtung 441 an die zweite Modulations-/Demodulationseinrichtung 442 übertragen, so dass diese wieder auf den daran angeschlossenen Energieanschluss 412 moduliert und von dort aus über ein Energiekabel 5' weiter, z.B. an die gegebenenfalls daran angeschlossene zweite Anschlussbox 4', übertragen werden können.

Alternativ dazu kann ein Datenkabel 21' an einen der Boxen-Datennetzwerkanschlüsse 42 angeschlossen werden. Die Daten können dann über dieses Datenkabel 21' an die gegebenenfalls daran angeschlossene zweite Anschlussbox 4' übertragen werden.

Sollte es beispielsweise gewünscht sein, dass in dem in Fig. 3b dargestellten Energienetz beispielsweise die fünfte Anschlussbox 4"" Daten an die Rechnereinheit 1 überträgt, so würden diese Daten zunächst über das fünfte Energiekabel 5"" an die vierte Anschlussbox 4"' und von dort aus über das vierte Energiekabel 5"' an die dritte Anschlussbox 4" übertragen werden, da die vierte und die fünfte Anschlussbox 4"", 4"' nicht an das Datennetzwerk 2 angeschlossen sind. Von der dritten Anschlussbox 4" aus werden die Daten über das dritte Datenkabel 21" an die erste Anschlussbox 4 und von dort aus über das erste Datenkabel 21 an die Rechnereinheit 1 übertragen.

Dabei sucht der Datennetzwerk-Switch 45 jeder beteiligten Anschlussbox 4,4",4"',4"" gemäß seinem Protokoll den jeweils günstigsten Übertragungsweg. Die Datenübertragung über die Boxen-Datennetzwerkanschlüsse 42 hat dabei Priorität vor der Datenübertragung über die Energieanschlüsse 411,412,413.

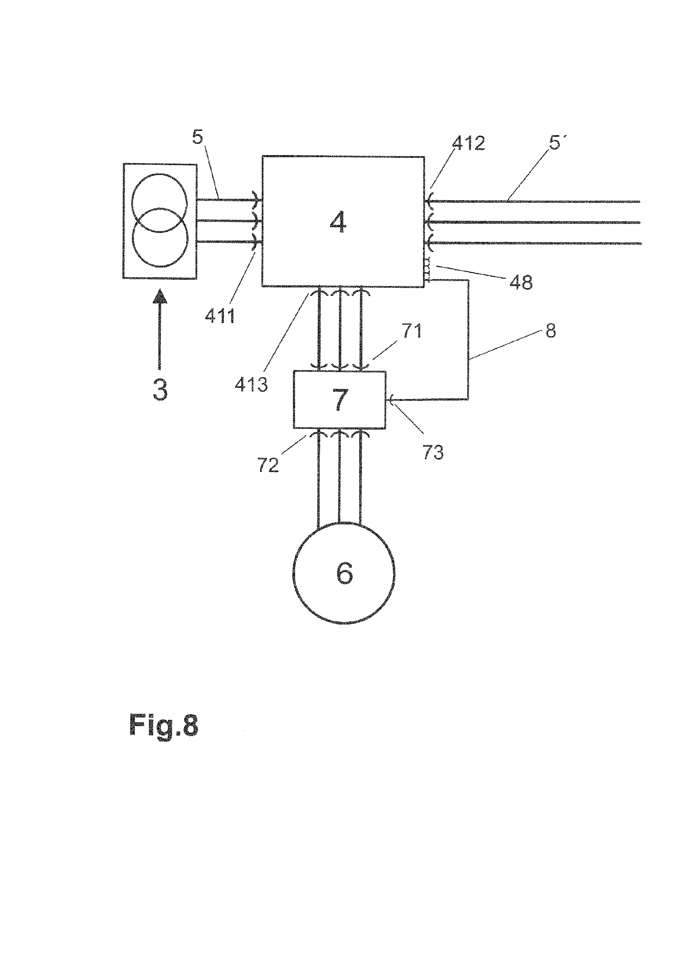

Weiterhin besitzt der Datennetzwerk-Switch 45 eine Schaltanschluss-Baugruppe 451 mit mehreren externen Schaltanschlüssen 48 zur Ansteuerung und/oder Abfrage jeweils eines elektrisch betätigbaren Schaltgeräts 7, dargestellt in der Fig.8.

In der Fig.8 ist eine Anschlussbox 4 mit einem über das elektrisch betätigbare Schaltgerät 7 angeschlossenen Verbraucher 6 dargestellt. Die Anschlussbox 4 ist über ihren ersten Energieanschluss 411 an ein Energiekabel 5 angeschlossen. Über dieses Energiekabel 5 erhält die Anschlussbox 4 elektrische Energie von der externen Energieversorgungseinrichtung 3.

Mit ihrem zweiten Energieanschluss 412 ist die Anschlussbox 4 an ein zweites Energiekabel 5' angeschlossen.

Mit ihrem dritten Energieanschluss 413 ist die Anschlussbox 4 über ein nicht bezeichnetes Energiekabel an einen ersten Stromanschluss 71 des elektrisch betätigbaren Schaltgeräts 7 angeschlossen. Dieses elektrisch betätigbare Schaltgerät 7 ist mit einem zweiten Stromanschluss 72 über ein weiteres nicht bezeichnetes Energiekabel an den elektrischen Verbraucher 6 angeschlossen. Außerdem ist einer der Schaltanschlüsse 48 der ersten Anschlussbox 4 über eine Schaltleitung 8 an einen Steueranschluss 73 des elektrisch betätigbaren Schaltgeräts 7 angeschlossen.

Bei Empfang eines entsprechenden Steuersignals an seinem Steuereingang 73 verbindet das elektrische Schaltgerät 7 seinen ersten Stromanschluss 71 elektrisch leitend mit seinem zweiten Stromanschluss 72.

Somit kann auch die Rechnereinheit 1 über die jeweilige Anschlussbox 4,4',4",4"',4"" die Stromzufuhr für einen oder mehrere Verbraucher 6,6',6",6"',6"" an- und abschalten. Selbstverständlich lassen sich die Verbraucher 6,6',6",6"',6"" über derartige Schaltgeräte 7 sowohl in den in Fig. 1 bis Fig. 6 dargestellten Energieverteilungen als auch in allen anderen möglichen Topologien an die jeweiligen Anschlussboxen 4,4',4",4"',4"" über je ein derartiges Schaltgerät 7 anschließen und somit an- und abschalten. Auch lässt sich ein solches Schaltgerät 7 auch in ganzen Zweigen des Energienetzes anordnen, und ist so in der Lage, ganze Netzwerksegmente an- und abzuschalten und/oder die Topologie zu ändern.

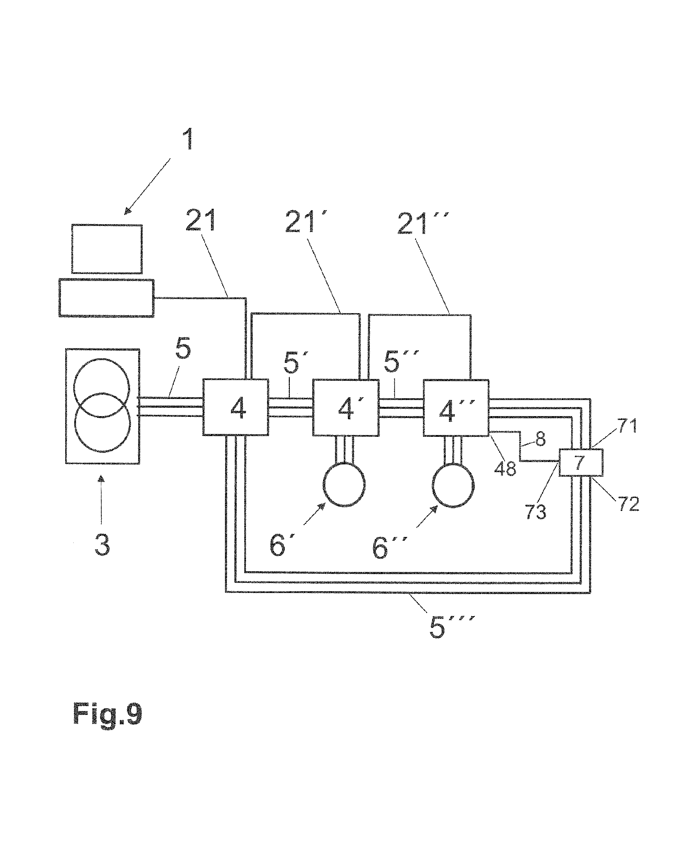

Fig.9 stellt dementsprechend in Anlehnung an das in Fig.6 dargestellte Energienetz eine schaltbare Ringstruktur dar. Die dritte Anschlussbox 4" ist dabei über ein nicht bezeichnetes Energiekabel an einen ersten Stromanschluss 71 des Schaltgeräts 7 angeschlossen. Der zweite Stromanschluss 72 des Schaltgeräts 7 ist über das vierte Energiekabel 5"' an einen Energieanschluss der ersten Anschlussbox 4 angeschlossen. Im Normalzustand können die beiden Stromanschlüsse 71,72 der Anschlussbox 7 elektrisch voneinander getrennt sein. Bei Bedarf gibt die Anschlussbox 4 auf Anweisung der Rechnereinheit 1 über einen ihrer Schaltanschlüsse 48 ein Signal, um das daran angeschlossene Schaltgerät 7 dazu zu veranlassen, seine Stromanschlüsse 71,72 elektrisch leitend miteinander zu verbinden, und somit für eine zusätzliche Energieverbindung zwischen der dritten Anschlussbox 4" und der ersten Anschlussbox 4 zu sorgen.

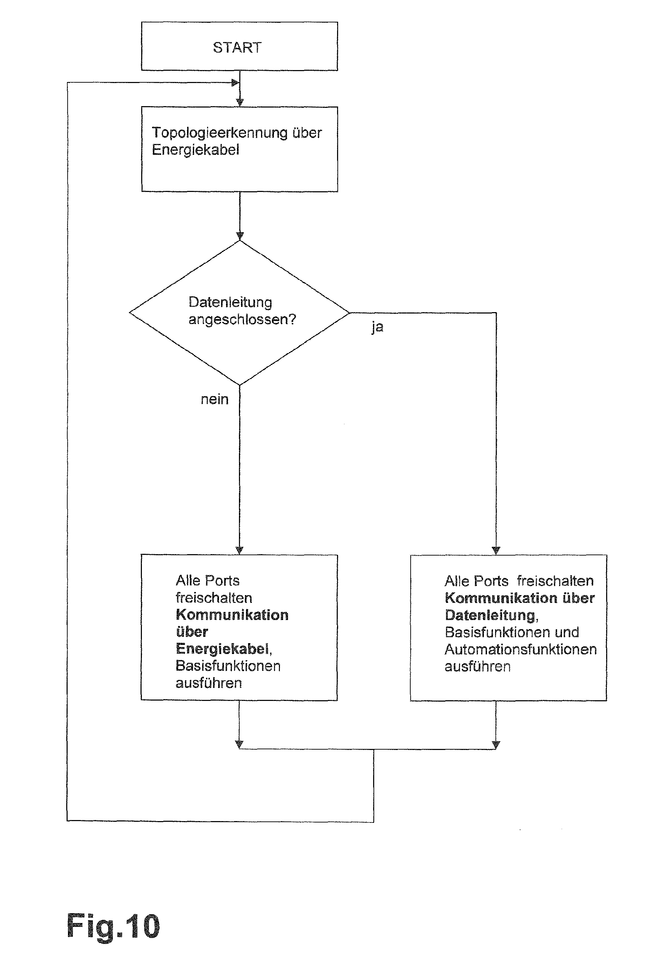

Fig. 10 stellt ein Ablaufdiagramm für ein Verfahren zum Betrieb eines Energienetzes dar. Dabei findet zunächst eine Topologieerkennung über die Energiekabel 5,5',5",5"',5"" statt. Diese basiert auf einer direkten Nachbarschaftserkennung, die im Folgenden an einem Beispiel erläutert wird:

In der Fig. 4 erhält beispielsweise die erste Anschlussbox 4 von den ihr direkt benachbarten Anschlussboxen 4',4"' deren Identifikation, beispielsweise deren IP-Adresse und/oder die MAC-Adresse deren Datennetzwerk-Switches 45 oder irgendeine andere interne Kennung, über die entsprechenden Energiekabel 5"',5'. Daraufhin können diese Identifikationen in diesem Fall über das Datenkabel 21 zusammen mit der eigenen Identifikation der Anschlussbox 4 an die Rechnereinheit 1 übertragen werden.

Auf die gleiche Weise sammeln auch die Anschlussboxen 4', 4",4"',4"" die Identifikationen ihrer jeweiligen direkten Nachbarn und übertragen diese zusammen mit ihrer jeweiligen eigenen Identifikation über die Energiekabel 5',5",5"',5"" und über das erste Datenkabel 21 in der oben beschriebenen Weise an die Rechnereinheit 1.

In der Rechnereinheit 1 werden diese Daten gesammelt und ausgewertet. Dadurch lässt sich die Topologie des Energienetzes abbilden und speichern. Diese Topologieerkennung kann regelmäßig, d.h. in regelmäßigen zeitlichen Abständen, z.B. in zeitlichen Intervallen von weniger als 10 Sekunden, insbesondere weniger als 5 Sekunden, besonders bevorzugt 3 Sekunden, wiederholt werden. Nach jeder Wiederholung findet ein Vergleich der neu ermittelten Topologie mit der gespeicherten Topologie statt. Wird eine Veränderung festgestellt, kann als Folge beispielsweise ein Alarm ausgelöst werden.

Insbesondere ist dies für die in Fig. 6 dargestellte Ringstruktur von großer Bedeutung. Wenn innerhalb der Ringstruktur ein Fehler auftritt, der z.B. darin besteht, dass eines der Energiekabel 5',5",5"' fehlt oder keinen elektrischen Kontakt hat, dann wird der Energiefluss zwar über einen alternativen Weg aufrecht erhalten. Durch die Wiederholung der Topologieerkennung wird dieser Fehler aber sofort erkannt und kann dementsprechend behoben werden, bevor er Auswirkungen auf die Stromversorgung einzelner Verbraucher 6',6" hat.

Die Messmittelbaugruppe 46 jeder Anschlussbox 4,4',4",4"',4"" kann Werte elektrischer Größen wie z.B. Strom und Spannung in zwei Zweigen 432,433 der Energieleitung 43 messen und die entsprechenden Werte in dem verbleibenden Zweig 431, der keinen Messpunkt aufweist, mit einer Recheneinheit daraus berechnen. Mit Hilfe der Recheneinheit werden dann jeweils die Effektivwerte von Strom und Spannung sowie die Wirkleistung in allen drei Phasen der drei Zweige 431,432,433 ermittelt und auf Anfrage der Rechnereinheit 1 an die Rechnereinheit 1 übertragen. Durch das Ermitteln und Übertragen lediglich der Effektivwerte von Strom und Spannung sowie der Wirkleistung wird Übertragungskapazität gegenüber einer vollständigen Übertragung aller Messwerte eingespart. Dieser Vorgang kann regelmäßig, d.h. in regelmäßigen zeitlichen Abständen, z.B. in zeitlichen Intervallen von weniger als 10 Sekunden, insbesondere weniger als 5 Sekunden, besonders bevorzugt 3 Sekunden, wiederholt werden.

Gemäß dem in Fig. 10 dargestellten Ablaufdiagram wird eine Topologieerkennung in regelmäßigen Abständen durchgeführt. Nach jeder Topologierkennung wird von jeder Anschlussbox 4,4',4",4"',4"" festgestellt, ob einer ihrer Boxen-Datennetzwerkanschlüsse 42 an das Datennetzwerk 2 angeschlossen ist.

Dementsprechend kann die Rechnereinheit 1 ermitteln, welche der Anschlussboxen 4,4',4",4"',4"" an das Datennetzwerk 2 angeschlossen sind.

Dementsprechend kann außerdem der Datennetzwerk-Switch 45 einer solchen Anschlussbox 4 gemäß seinem Protokoll entscheiden, ob nur Basisfunktionen oder zusätzlich auch Automatisierungsfunktionen ausgeführt werden, und ob die jeweiligen Daten über einen Boxen-Datennetzwerkanschluss 42 und ein daran angeschlossenes Datenkabel 21,21',21",21"',21"" oder über den entsprechenden Energieanschluss 411,412,413 und ein daran angeschlossenes Energiekabel 5,5',5",5"',5"" gesendet werden.

Durch Auswerten und Speichern der Werte relevanter elektrischer Größen in einer Datenbank der Rechnereinheit 1 können auch grafische und statistische Auswertungen stattfinden, welche Aufschluss über den Gesamtenergieverbrauch und den einzelnen Energieverbrauch an jeder Anschlussbox geben.

Auch können so bestimmte festzulegende, z.B. entbehrliche Verbraucher 6,6',6",6"',6"" in Abhängigkeit vom Gesamtenergieverbrauch abgeschaltet werden.

Die Erfindung ist nicht auf das Ausführungsbeispiel beschränkt, sondern im Rahmen der Offenbarung vielfach variabel. Bei dem zuvor beschriebenen Energienetz handelt es sich beispielsweise exemplarisch um ein Drehstromnetz; die offenbarten Ausführungen lassen sich aber auf andere Energienetze wie Gleich- und Wechselstromnetze übertragen. Auch lassen sich die beschriebenen Ausführungen auf beliebige, insbesondere wesentlich umfangreichere Topologien als die gezeigten, übertragen. Insbesondere ist die Anwendung nicht auf die Administration durch eine zentrale Rechnereinheit 1 beschränkt. Stattdessen können sich die Anschlussboxen 4,4',4",4"',4"" auch autark selbst administrieren, beispielsweise, indem die erste Anschlussbox 4 die beschriebenen Kennzeichen und die beschriebenen Funktionen der Rechnereinheit 1 ganz oder teilweise übernimmt.

### Bezugszeichenliste

- 1: Rechnereinheit

- 2: Datennetzwerk
- 21,21',21",...: Datenkabel

- 3: externe Energieversorgungseinrichtung

- 4,4',4",...: Anschlussboxen
- 411,412,413: elektrische Energieanschlüsse
- 42: Boxen-Datennetzwerkanschlüsse
- 43: Energieleitung
- 431,432,433: verschiedene Zweige der Energieleitung
- 441,442,443: Modulations-/Demodulationseinrichtungen
- 45: Datennetzwerk-Switch
- 451: Schaltanschluss-Baugruppe
- 46: Messmittelbaugruppe
- 462,463: Messpunkte
- 471,472,473,476: Datenbusleitungen
- 48: externe Schaltanschlüsse

- 5,5',5",...: Energiekabel

- 6,6',6",...: Verbraucher

- 7: Schaltgerät
- 71,72: Stromanschlüsse des Schaltgeräts
- 73: Steueranschluss des Schaltgeräts

- 8: Schaltleitung

## Patentansprüche

1. Verfahren zum Betrieb eines Energienetzes mit einer Rechnereinheit (1) und mehrere Anschlussboxen (4,4',4",4"',4""), wobei in jeder Anschlussbox (4,4',4",4"',4"") eine sich verzweigende interne Energieleitung (43) mindestens drei Energieanschlüsse (411,412,413) dieser Anschlussbox (4,4',4",4"',4"") elektrisch leitend miteinander verbindet,
wobei das Verfahren eine Topologieerkennung umfasst, die folgende Schritte aufweist:
- sequentielles Abfragen der Anschlussboxen (4,4',4",4"',4"") durch die Rechnereinheit (1) mittels einer dazugehörigen Software über einen dazugehörigen Rechner-Datennetzwerkanschluss und über zumindest einen Boxen-Datennetzwerkanschluss (42) zumindest einer ersten Anschlussbox (4) sowie über einen oder mehrere Boxen-Datennetzwerkanschlüsse (42,42',42",42"',42"") und/oder einen oder mehrere Energeianschlüsse (411,412,413, 411',412',413', 411",412",413", 411"',412"',413"', 411"",412"",413"") der Anschlussboxen (4,4',4",4"',4"");
- Durchführen einer direkten Nachbarschaftserkennung zwischen jeder Anschlussbox (4,4',4",4"',4"") und mindestens einer ihr direkt benachbarten Anschlussbox (4,4',4",4"',4""), wobei solche einander direkt benachbarten Anschlussboxen (4,4',4",4"',4"") sich dadurch auszeichnen, sie mit jeweils einem ihrer Energieanschlüsse (411,412,413,411',412',413',...) über ein Energiekabel (5,5',5",5"',5"") aneinander angeschlossen sind, wobei zumindest von einer dieser beiden direkt benachbarten Anschlussboxen (4,4',4",4"',4"") eine dazugehörige Identifikation über dieses Energiekabel (5,5',5",5"',5"") an die jeweils andere dieser beiden direkt benachbarten Anschlussboxen (4,4',4",4"',4"") übertragen wird,
wobei durch elektrische Filter in den Anschlussboxen (4,4',4",4"', 4"") dafür gesorgt wird, dass die der Identifikation dienenden Daten ausschließlich zwischen benachbarten Anschlussboxen (4,4',4",4"',4"") ausgetauscht werden;
- Übertragen der direkten Nachbarschaftsbeziehungen von den jeweiligen Anschlussboxen (4,4',4",4"',4"") an die Rechnereinheit (1);
- Abbilden der Topologie des Energienetzes entsprechend der übertragenen direkten Nachbarschaftsbeziehungen durch die Rechnereinheit (1) mittels der Software.

2. Verfahren nach Anspruch 1, wobei das besagte Übertragen der direkten Nachbarschaftsbeziehungen von den jeweiligen Anschlussboxen (4,4',4",4"',4"") an die Rechnereinheit (1) folgendermaßen stattfindet:
- Sammeln der Identifikation ihrer jeweiligen direkten Nachbarn durch die einzelnen Anschlussboxen (4,4',4",4"',4"");
- Übertragen dieser Identifikation der direkten Nachbarn zusammen mit ihrer eigenen Identifikation von den Anschlussboxen (4,4',4",4"',4"") an die Rechnereinheit (1), wobei
- diese Übertragung der Identifikationen von den weiteren Anschlussboxen (4',4",4"',4"") an die erste Anschlussbox (4) über einen oder mehrere der Boxen-Datennetzwerkanschlüsse (42,42',42",42"',42"") und/oder über einen oder mehrere der Energieanschlüsse (411,412,413,411',412',413',411",412",413", 411 "',412"',413"',411 "",412"",413"") stattfindet, und wobei
- die Übertragung der Identifikationen weiterhin von der ersten Anschlussbox (4) an die Rechnereinheit (1) über den Boxen-Datennetzwerkanschluss (42) der ersten Anschlussbox (4) und den Rechner-Datennetzwerkanschluss stattfindet.

3. Verfahren nach einem der Ansprüche 2 bis 3, wobei die Energieleitung (43) die Energieanschlüsse (411,412,413) über elektrische Filter miteinander verbindet.

4. Verfahren nach Anspruch 3, wobei die Energieleitung (43) die Energieanschlüsse (411,412,413) über Induktivitäten der elektrische Filter miteinander verbindet.

5. Verfahren nach einem der vorstehenden Ansprüche, wobei das sequentielle Abfragen der Anschlussboxen (4,4',4",4"',4"") durch die Rechnereinheit (1) sowie die Übertragung der Identifikationen von den Anschlussboxen (4,4',4",4"',4"") an die Rechnereinheit (1) in Form einer Datenübertragung durch einen Datennetzwerk-Switch (45) erfolgt.

6. Verfahren nach Anspruch 5, wobei die Datenübertragung bei einer Übertragung über einen Energieanschluss (411,412,413) zuvor mit einer dazugehörigen Modulation-/Demodulationseinrichtung (441,442,443) moduliert werden.

7. Verfahren nach einem der vorstehenden Ansprüche, wobei
- die nachgebildete Topologie des Energienetzes in der Rechnereinheit (1) gespeichert wird;
- die Topologie in regelmäßigen zeitlichen Abständen erneut nachgebildet wird;
- jede erneut nachgebildete Topologie mit der gespeicherten Topologie verglichen wird;
- bei Abweichungen zwischen der gespeicherten Topologie und der erneut ermittelten Topologie von der Rechnereinheit (1) ein Warnhinweis generiert wird.

8. Verfahren nach Anspruch 7, wobei
- nach jeder Topologieerkennung jede Anschlussbox (4,4',4",4"',4"") ihren Anschluss an das Datennetzwerk (2) überprüft, woraufhin
- entweder bei nicht angeschlossenem Datennetzwerk (2) die zu einer Aufrechterhaltung von Basisfunktionen des Energienetzes zu übertragende Daten über die jeweiligen Energieanschlüsse (411,412,413) und die entsprechenden Energiekabel (5,5',5",5"',5"") übertragen werden;
- oder bei angeschlossenem Datennetzwerk (2) die zu der Aufrechterhaltung von Basisfunktionen des Energienetzes zu übertragenden Daten bevorzugt über das Datennetzwerk (2) übertragen werden.

9. Verfahren nach Anspruch 8, **dadurch gekennzeichnet, dass** die Topologieerkennung zu den Basisfunktionen des Energienetzes zählt.

10. Verfahren nach einem der Ansprüche 8 bis 9, **dadurch gekennzeichnet, dass** ein Ermitteln und Übertragen der Werte elektrischer Größen wie Strom, Spannung und Leistung von einzelnen Anschlussboxen (4,4',4",4"',4"") an die Rechnereinheit (1) stattfindet und zu den Basisfunktionen des Energienetzes zählt.

11. Verfahren nach Anspruch 10, **dadurch gekennzeichnet**,
- das jede Anschlussbox (4,4',4",4"',4"") in der Rechnereinheit (1) mit einem Namen eindeutig bezeichnet wird;
- dass die Rechnereinheit (1) dem Namen jeder Anschlussbox (4,4',4",4"',4"") die MAC-Adresse des dazugehörigen Datennetzwerk-Switches (45) zuordnet und speichert;
- dass die Rechnereinheit (1) die Werte elektrischer Größen jeder Anschlussbox (4,4',4",4"',4"") dem Namen dieser Anschlussbox (4,4',4",4"',4"") zuordnet und speichert.

## Claims

1. A method of operating an energy grid with a computer unit (1) and a plurality of connection boxes (4, 4', 4", 4"', 4""), wherein, in each connection box (4, 4', 4", 4"', 4""), a branching internal energy line (43) electrically conductively connects at least three energy connections (411, 412, 413) of this connection box (4, 4', 4", 4"', 4"") to one another,
the method comprising a topology identification including the following steps:
- sequential interrogation of the connection boxes (4, 4', 4", 4"', 4"") by the computer unit (1) by means of an associated software via an associated computer data network connection and via at least one box data network connection (42) of at least a first connection box (4) and via one or more box data network connections (42, 42', 42", 42"', 42"") and/or one or more energy connections (411, 412, 413, 411', 412', 413', 411", 412", 413", 411 "', 412"', 413"', 411"", 412"", 413"") of the connection boxes (4, 4', 4", 4"', 4"");
- carrying out a direct neighbor identification between each connection box (4, 4', 4", 4"', 4"") and at least one connection box (4, 4', 4", 4"', 4"") directly neighboring thereto, wherein such mutually directly neighboring connection boxes (4, 4', 4", 4"', 4"") distinguish themselves in that they are connected to one another by a respective one of their energy connections (411, 412, 413, 411', 412', 413', ...) via an energy cable (5, 5', 5", 5"', 5""), an associated identification being transmitted at least from one of these two directly neighboring connection boxes (4, 4', 4", 4"', 4"") to the respective other one of these two directly neighboring connection boxes (4, 4', 4", 4"', 4"") via this energy cable (5, 5', 5", 5"', 5""), electrical filters in the connection boxes (4, 4', 4", 4"', 4"") ensuring that the data used for the identification are exchanged exclusively between neighboring connection boxes (4, 4', 4", 4"', 4"");
- transmitting the direct neighbor relationships from the respective connection boxes (4, 4', 4", 4"', 4"") to the computer unit (1);
- imaging of the topology of the energy grid corresponding to the transmitted direct neighbor relationships by the computer unit (1) by means of the software.

2. The method according to claim 1, wherein said transmission of the direct neighbor relationships from the respective connection boxes (4, 4', 4", 4"', 4"") to the computer unit (1) takes place in the following way:
- collecting the identification of their respective direct neighbors by the individual connection boxes (4, 4', 4", 4"', 4"");
- transmitting this identification of the direct neighbors together with their own identification from the connection boxes (4, 4', 4", 4"', 4"") to the computer unit (1),
- this transmission of the identifications from the further connection boxes (4', 4", 4"', 4"") to the first connection box (4) taking place via one or more of the box data network connections (42, 42', 42", 42"', 42"") and/or via one or more of the energy connections (411, 412, 413, 411', 412', 413', 411", 412", 413", 411"', 412"', 413"', 411"", 412"", 413""), and
- the transmission of the identifications furthermore taking place from the first connection box (4) to the computer unit (1) via the box data network connection (42) of the first connection box (4) and the computer data network connection.

3. The method according to either of claims 2 to 3, wherein the energy line (43) connects the energy connections (411, 412, 413) to one another via electric filters.

4. The method according to claim 3, wherein the energy line (43) connects the energy connections (411, 412, 413) to one another via inductors of the electric filters.

5. The method according to any of the preceding claims, wherein the sequential interrogation of the connection boxes (4, 4', 4", 4"', 4"") by the computer unit (1) and the transmission of the identifications from the connection boxes (4, 4', 4", 4"', 4"") to the computer unit (1) take place in the form of a data transmission by a data network switch (45).

6. The method according to claim 5, wherein in the case of a transmission via an energy connection (411, 412, 413), the data transmission is modulated beforehand with an associated modulation/demodulation device (441, 442, 443).

7. The method according to any of the preceding claims, wherein
- the reproduced topology of the energy grid is stored in the computer unit (1);
- the topology is reproduced again at regular time intervals;
- each newly reproduced topology is compared with the stored topology;
- in the event of discrepancies between the stored topology and the newly determined topology, a warning indication is generated by the computer unit (1).

8. The method according to claim 7, wherein
- after each topology identification, each connection box (4, 4', 4", 4"', 4"") checks its connection to the data network (2), whereupon
- either, when the data network (2) is not connected, the data to be transmitted in order to maintain basic functions of the energy grid are transmitted via the respective energy connections (411, 412, 413) and the corresponding energy cables (5, 5', 5", 5"', 5"");
- or, when the data network (2) is connected, the data to be transmitted in order to maintain basic functions of the energy grid are preferably transmitted via the data network (2).

9. The method according to claim 8, **characterized in that** the topology identification counts among the basic functions of the energy grid.

10. The method according to either of claims 8 to 9, **characterized in that** a determination and transmission of the values of electric variables such as current, voltage and power from individual connection boxes (4, 4', 4", 4"', 4"") to the computer unit (1) take place and count among the basic functions of the energy grid.

11. The method according to claim 10, **characterized in that**
- each connection box (4, 4', 4", 4"', 4"") is uniquely denoted by a name in the computer unit (1);
- **in that** the computer unit (1) assigns the MAC address of the associated data network switch (45) to the name of each connection box (4, 4', 4", 4"', 4"") and stores this;
- **in that** the computer unit (1) assigns the values of electric variables of each connection box (4, 4', 4", 4"', 4"") to the name of this connection box (4, 4', 4", 4"', 4"") and stores them.

## Revendications

1. Procédé de mise en oeuvre d'un réseau d'énergie comportant une unité informatique (1) et plusieurs boîtes de connexion (4, 4', 4", 4"', 4""), une ligne d'énergie interne (43) qui se ramifie reliant dans chaque boîte de connexion (4, 4', 4", 4"', 4"") au moins trois raccords d'énergie (411, 412, 413) de cette boîte de connexion (4, 4', 4", 4"', 4"") les uns aux autres de manière électriquement conductrice,
le procédé comprenant une reconnaissance de topologie qui comporte les étapes suivantes :
- interrogation séquentielle des boîtes de connexion (4, 4', 4", 4"', 4"") par l'unité informatique (1) au moyen d'un logiciel associé par l'intermédiaire d'un raccord de réseau de données d'ordinateur associé et par l'intermédiaire d'au moins un raccord de réseau de données de boîte (42) d'au moins une première boîte de connexion (4), et par l'intermédiaire d'un ou de plusieurs raccords de réseau de données de boîte (42, 42', 42", 42"', 42"") et/ou d'un ou de plusieurs raccords d'énergie (411, 412, 413, 411', 412', 413', 411", 412", 413", 411"', 412"', 413"', 411 "", 412"", 413"") des boîtes de connexion (4, 4', 4", 4"', 4"") ;
- exécution d'une reconnaissance de voisinage direct entre chaque boîte de connexion (4, 4', 4", 4"', 4"") et au moins une boîte de connexion (4, 4', 4", 4"', 4"") directement voisine, de telles boîtes de connexion (4, 4', 4", 4"', 4"") directement voisines se distinguant en ce qu'elles sont respectivement connectées les unes aux autres par l'un de leurs raccords d'énergie (411, 412, 413, 411', 412', 413', ...) par l'intermédiaire d'un câble d'énergie (5, 5', 5", 5"', 5""), une identification associée étant transmise par l'intermédiaire de ce câble d'énergie (5, 5', 5", 5"', 5"") depuis au moins l'une de ces deux boîtes de connexion (4, 4', 4", 4"', 4"") directement voisines vers l'autre boîte respective de ces deux boîtes de connexion (4, 4', 4", 4"', 4"") directement voisines, des filtres électriques dans les boîtes de connexion (4, 4', 4", 4"', 4"") veillant à ce que les données servant à l'identification soient exclusivement échangées entre des boîtes de connexion voisines (4, 4', 4", 4"', 4"") ;
- transmission des relations de voisinage directes depuis les boîtes de connexion (4, 4', 4", 4"', 4"") respectives vers l'unité informatique (1) ;
- représentation de la topologie du réseau d'énergie selon les relations de voisinage directes transmises par l'unité informatique (1) au moyen du logiciel.

2. Procédé selon la revendication 1, ladite transmission des relations de voisinage directes des boîtes de connexion (4, 4', 4", 4"', 4"") respectives vers l'unité informatique (1) étant réalisée de la manière suivante :
- collection par les boîtes de connexion individuelles (4, 4', 4", 4"', 4"") de l'identification de ses voisins directs respectifs ;
- transmission de cette identification des voisins directs ensemble avec sa propre identification des boîtes de connexion (4, 4', 4", 4"', 4"") vers l'unité informatique (1),
- cette transmission de l'identification des autres boîtes de connexion (4', 4", 4"', 4"") vers la première boîte de connexion (4) étant réalisée par l'intermédiaire d'un ou de plusieurs des raccords de réseau de données de boîte (42, 42', 42", 42"', 42"") et/ou par l'intermédiaire d'un ou de plusieurs des raccords d'énergie (411, 412, 413, 411', 412', 413', 411", 412", 413", 411"', 412"', 413"', 411 "", 412"", 413""), et
- la transmission de l'identification étant en outre réalisée de la première boîte de connexion (4) vers l'unité informatique (1) par l'intermédiaire du raccord de données de réseau de boîte (42) de la première boîte de connexion (4) et du raccord de réseau de données d'ordinateur.

3. Procédé selon l'une des revendications 2 à 3, la ligne d'énergie (43) reliant les raccords d'énergie (411, 412, 413) les uns aux autres par des filtres électriques.

4. Procédé selon la revendication 3, la ligne d'énergie (43) reliant les raccords d'énergie (411, 412, 413) les uns aux autres par des inductances des filtres électriques.

5. Procédé selon l'une des revendications précédentes, l'interrogation séquentielle des boîtes de connexion (4, 4', 4", 4"', 4"") par l'unité informatique (1) et la transmission des identifications des boîtes de connexion (4, 4', 4", 4"', 4"") vers l'unité informatique (1) étant effectuées sous forme de transmission de données par un switch de réseau de données (45).

6. Procédé selon la revendication 5, la transmission de données, dans le cas d'une transmission par l'intermédiaire d'un raccord d'énergie (411, 412, 413), étant d'abord modulée au moyen d'un dispositif de modulation/démodulation (441, 442, 443) associé.

7. Procédé selon l'une des revendications précédentes,
- la topologie reproduite du réseau d'énergie étant mémorisée dans l'unité informatique (1) ;
- la topologie étant de nouveau reproduite à intervalles de temps réguliers ;
- chaque nouvelle topologie reproduite étant comparée à la topologie mémorisée ;
- un avertissement étant généré par l'unité informatique (1) dans le cas d'une différence entre la topologie mémorisée et la nouvelle topologie déterminée.

8. Procédé selon la revendication 7,
- chaque boîte de connexion (4, 4', 4", 4"', 4"") vérifiant son raccord au réseau de données (2) après chaque reconnaissance de topologie, en réponse à quoi
- soit les données à transmettre pour le maintien de fonctions de base du réseau d'énergie sont transmises par l'intermédiaire des raccords d'énergie (411, 412, 413) respectifs et des câbles d'énergie (5, 5', 5", 5"', 5"") correspondants lorsque le réseau de données (2) n'est pas connecté,
- soit les données à transmettre pour le maintien de fonctions de base du réseau d'énergie sont de préférence transmises par l'intermédiaire du réseau de données (2) lorsque le réseau de données (2) est connecté.

9. Procédé selon la revendication 8, **caractérisé en ce que** la reconnaissance de topologie fait partie des fonctions de base du réseau d'énergie.

10. Procédé selon l'une des revendications 8 à 9, **caractérisé en ce qu'**une détermination et transmission des valeurs de grandeurs électriques telles que le courant, la tension et la puissance à partir de boîtes de connexion (4, 4', 4", 4'", 4"") individuelles vers l'unité informatique (1) sont effectuées et font partie des fonctions de base du réseau d'énergie.

11. Procédé selon la revendication 10, **caractérisé en ce que**
- chaque boîte de connexion (4, 4', 4", 4"', 4"") dans l'unité informatique (1) est dénommée univoquement par un nom ;
- **en ce que** l'unité informatique (1) associe au nom de chaque boîte de connexion (4, 4', 4", 4"', 4"") l'adresse MAC du switch de réseau de données (45) associé et la mémorise ;
- **en ce que** l'unité informatique (1) associe les valeurs de grandeurs électriques de chaque boîte de connexion (4, 4', 4", 4"', 4"") au nom de cette boîte de connexion (4, 4', 4", 4"', 4"") et les mémorise.
